# EUROPEAN PATENT APPLICATION

(11) **EP 3 001 363 A1**
(43) Date of publication of application: **30.03.2016**
(21) Application number: 15178687.8
(22) Date of filing: 28.07.2015
(51) Int. Cl.: G06Q 10/06

(54) **APPARATUS, SCHEDULING METHOD AND PROGRAM**

(30) Priority: 22.09.2014 JP 2014192544
(71) Applicant: FUJITSU LIMITED, Kawasaki-shi, Kanagawa 211-8588 (JP)
(72) Inventor: SUMIOKA, Motoshi, Kawasaki-shi, Kanagawa 211-8588 (JP); NODA, Masahide, Kawasaki-shi, Kanagawa 211-8588 (JP); TAIRA, Kei, Kawasaki-shi, Kanagawa 211-8588 (JP); OHNO, Takashi, Kawasaki-shi, Kanagawa 211-8588 (JP)
(74) Representative: Fenlon, Christine Lesley

(57) **Abstract**

An apparatus includes a memory and a processor coupled to the memory and configured to specify a second user having a given processing aptitude relating to a first task to be executed by a first user from among a plurality of users, specify a first overlapping period between a first free period of a first schedule of the first user and a second free period of a second schedule of the second user, and set a scheduled execution period for the first task including at least part of the first overlapping period to the first schedule.

## Description

### TECHNICAL FIELD

The present disclosure relates to an apparatus, a scheduling method and a program.

### BACKGROUND ART

As an electronic tool for retaining a behavior schedule of a person recorded therein, a schedule management tool such as an electronic schedule notebook is available. The schedule management tool is stored in a portable terminal device of an individual user or in a common terminal device that can be accessed by a plurality of users. In the electronic schedule notebook, scheduled start time or scheduled end time of contents of a behavior (hereinafter referred to as task) to be executed by a user of the electronic schedule notebook is stored. The user of the electronic schedule notebook can manage the schedule of the user itself by causing contents of the electronic schedule notebook to be displayed on a display unit of the terminal device so that the contents of the electronic schedule notebook can be confirmed by the user itself. Also, a task management tool such as business process management (BPM) has been developed which instructs a person in charge of a particular work to execute a task generated in the work so as to manage the execution of the work. When a new task is generated, the task management tool acquires a schedule of a user who is to execute the task (such a user is hereinafter referred to as task executor) from an electronic schedule notebook or the like of the task executor. Then, within a free period that is a period within which execution of no any other task is scheduled in the schedule of the task executor, a scheduled execution period for the new task is set. As a prior art document, Japanese Laid-open Patent Publications No. 09-259178, No. 2009-289134, No. 2014-049085 and No. 2006-039603 are applicable.

### SUMMARY

### TECHNICAL PROBLEM

According to the prior art task management tool, a scheduled execution period for a task is determined taking a free period in the schedule of the task executor into consideration. For example, in such a case that some trouble occurs while the task executor is executing a task or the task executor has some question in execution policy of a task or the like, the task executor sometimes wants to be supported by some different user who has a given processing aptitude for the task. However, even in such a case, if the different user having a given processing aptitude is executing some other task, then the task executor may not be able to be supported by the different user.

### SOLUTION TO PROBLEM

According to an embodiment of an aspect of the invention, an apparatus includes a memory and a processor coupled to the memory and configured to specify a second user, from among a plurality of users, having a given processing aptitude relating to a first task to be executed by a first user, specify a first overlapping period between a first free period of a first schedule of the first user and a second free period of a second schedule of the second user, and set a scheduled execution period for the first task including at least part of the first overlapping period to the first schedule.

### ADVANTAGEOUS EFFECTS OF INVENTION

In embodiments to be described below, a scheduling method is proposed which makes it easy to get supporting by a different user who has a given processing aptitude. By the scheduling method, when a task executor executes a task, it becomes possible for the task executor to be supported by a different user who has a given processing aptitude.

By the scheduling method disclosed herein, a scheduled execution period for a task can be specified so as to include an overlapping period between a free period in a schedule of a user who is to execute a task and a free period in a schedule of a different user having a given processing aptitude in execution of the task.

### BRIEF DESCRIPTION OF DRAWINGS

The invention is described, by way of example only, with reference to the following drawings, in which:
FIG. 1 is a view depicting a configuration of a system including a scheduling supporting apparatus according to a first embodiment;
FIG. 2 is a block diagram depicting a hardware configuration of a scheduling supporting apparatus in the first embodiment;
FIG. 3 is a block diagram depicting a hardware configuration of a task information source in the first embodiment;
FIG. 4 is a block diagram depicting a hardware configuration of a user interface device in the first embodiment;
FIGS. 5A and 5B are views depicting examples of a task information template and task information in the first embodiment;
FIG. 6 is a view depicting an example of a schedule of users in the first embodiment;
FIGS. 7A to 7C are views illustrating examples of processing aptitude information of users in the first embodiment;
FIG. 8 is a functional block diagram of a scheduling supporting apparatus in the first embodiment;
FIG. 9 is a view illustrating a scheduling method according to the first embodiment;
FIG. 10 is a view depicting a scheduling result in the first embodiment;
FIG. 11 is a view illustrating another example of a scheduling method according to the first embodiment;
FIG. 12 is a view illustrating a further example of a scheduling method according to the first embodiment;
FIG. 13 is a view depicting another example of a scheduling result in the first embodiment;
FIG. 14 is a flow chart of a process executed by a scheduling supporting apparatus in the first embodiment;
FIGS. 15A and 15B are views illustrating examples of a method for creating a capability index in the first embodiment;
FIGS. 16A to 16C are views depicting examples of task information according to a second embodiment;
FIG. 17 is a view illustrating a scheduling method and a scheduling result according to the second embodiment;
FIG. 18 is a view illustrating a scheduling method according to the second embodiment;
FIG. 19 is a view illustrating a scheduling method and a scheduling result according to the second embodiment;
FIG. 20 is a flow chart of a process executed by a scheduling supporting apparatus in the second embodiment;
FIG. 21 is a flow chart of a process executed by a scheduling supporting apparatus in the second embodiment;
FIG. 22 is a view depicting an example of task information according to a third embodiment;
FIG. 23 is a view depicting a scheduling method and a scheduling result according to the third embodiment;
FIG. 24 is a view depicting an example of task information according to a fourth embodiment;
FIG. 25 is a view depicting a scheduling method and a scheduling result according to the fourth embodiment;
FIG. 26 is a view depicting an example of task information according to a fifth embodiment;
FIG. 27 is a view depicting a scheduling method and a scheduling result according to the fifth embodiment;
FIG. 28 is a view depicting another example of task information according to the fifth embodiment;
FIG. 29 is a view depicting another scheduling method and another scheduling result according to the fifth embodiment;
FIG. 30 is a view depicting a scheduling method and a scheduling result according to a sixth embodiment;
FIG. 31 is a view illustrating a re-scheduling method; and
FIG. 32 is a view illustrating a feedback method.

### DESCRIPTION OF EMBODIMENTS

The meaning of the terms used herein is described. "Task" is used as a term that can include acts in general performed by a person and can include not only works in operation but also private acts such as travel and diner. Also a rest between a plurality of acts, an act to move to a particular place in order to execute a next act and so forth can all be included in the "task." "Task information" signifies information that prescribes contents of a task and can include contents of a particular work, an executor of the task, a period of time taken for execution of the task and so forth. "Scheduling" signifies to set at least one of scheduled start time and scheduled end time for a task for which none of scheduled start time and scheduled end time is set or to change and reset scheduled start time or scheduled end time for a task for which at least one of scheduled start time and scheduled end time is set. "Schedule" signifies a schedule that includes information that specifies contents of a task and information that prescribes at least one of scheduled start time and scheduled end time for the task. "Task executor" signifies a user who executes a task. "Processing aptitude" signifies a characteristic of a user who can support execution of a task by a task executor, and "supporter" signifies a user who is different from the task executor and has the processing aptitude described above. Further, "schedule by mediation" signifies to perform scheduling of a task by referring not only to schedule contents of the task executor but also schedule contents of a supporter. "Capability index" is an index that is a value indicative of a capability of a user in execution of a task and is used to decide whether or not the user has the processing aptitude described above. The capability index can be determined from various points of view. For example, the capability index may be set such that a user who can execute a particular task in a shorter period of time has a higher capability index. Alternatively, the capability index may be set on the basis of evaluation for a result obtained by executing a task.

### <First Embodiment>

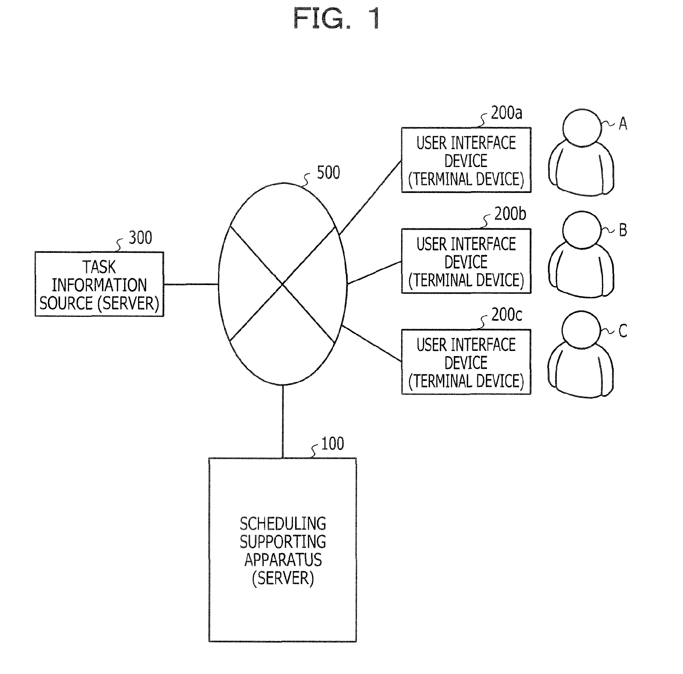

FIG. 1 is a view depicting a configuration of a system including a scheduling supporting apparatus according to a first embodiment. The scheduling supporting apparatus 100 performs scheduling of a task prescribed by task information generated by a task information source 300. For the scheduling supporting apparatus 100, an information processing apparatus such as a server can be used. The task information source 300 generates task information. The task information source 300 is, for example, a BPM server. The task information source 300 is capable of accessing the scheduling supporting apparatus 100 through a network 500.

The scheduling supporting apparatus 100 is coupled to user interface devices 200a, 200b and 200c (where there is no intention to specify a particular one of the user interface devices, it is hereinafter referred to as user interface device 200) through the network 500. Each user interface device 200 is an electronic device that can be utilized as a schedule management tool for a task by a user. Users A, B and C can recognize contents of a task or contents of a schedule using the user interface devices 200a, 200b and 200c, respectively. For the user interface device 200, a portable terminal device such as a smartphone, a personal computer (PC) of the notebook type or the desk top type, a personal digital assistant (PDA) or the like can be used. In the following, an outline of operations of the system is described.

First, a designer of a task such as, for example, a manager who manages works of a plurality of persons in an organization such as a company would use the task information source 300 to create task information that specifies contents of a task and a user who is to execute the task. The created task information is transmitted from the task information source 300 to the scheduling supporting apparatus 100. The scheduling supporting apparatus 100 receives the task information transmitted from the task information source 300 and performs, for the task prescribed by the task information, setting of a scheduled execution period for the task, namely, setting of scheduled start time and scheduled end time. When to perform setting of a scheduled execution period, the scheduling supporting apparatus 100 grasps a processing aptitude of the users A, B and C in execution of the task (details of the grasping method of the processing aptitude are hereinafter described). Further, the scheduling supporting apparatus 100 specifies the user (task executor) prescribed by the task information and a user (supporter) having a given processing aptitude. Then, the scheduling supporting apparatus 100 creates a schedule by setting a scheduled execution period for the task so that the task may be executed within a period within which a free period in the schedule of the task executor and a free period in the schedule of the supporter overlap with each other. The created schedule is conveyed from the scheduling supporting apparatus 100 to the user interface device 200 of the task executor. By such scheduling, the scheduled execution period for the task is set to a free period in the schedule of the supporter who has the given processing aptitude, and therefore, the task executor can be supported by the supporter while the task executor is executing the task.

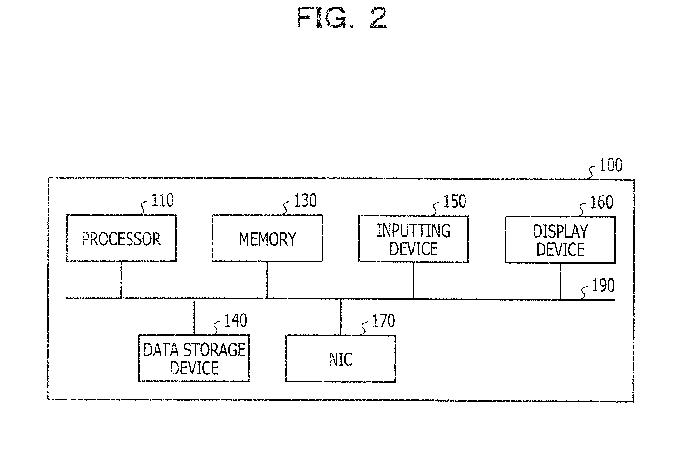

FIG. 2 is a block diagram depicting a hardware configuration of a scheduling supporting apparatus in the first embodiment. The scheduling supporting apparatus in FIG. 2 may be the scheduling supporting apparatus 100 depicted in FIG. 1. The scheduling supporting apparatus 100 includes a processor 110, a memory 130, a data storage device 140, an inputting device 150, a display device 160, a network interface card (NIC) 170 and a bus 190.

The processor 110 performs control of the entire scheduling supporting apparatus 100, data processing and so forth. Further, the processor 110 performs control for scheduling of a task received from the task information source 300, transmission of a created schedule to the user interface device 200 and so forth. The processor 110 is an electronic circuit part such as a central processing unit (CPU), a micro control unit (MCU), a micro processing unit (MPU), a digital signal processor (DSP) or a field programmable gate array (FPGA). The memory 130 stores therein data to be used for given processing by the processor 110, resulting data of data processing performed by the processor 110 and so forth. The memory 130 is an electronic circuit part including a volatile memory such as a dynamic random access memory (DRAM) or a static random access memory (SRAM) and a nonvolatile memory such as a mask read only memory (mask ROM), a programmable ROM (PROM) or a flash memory. The data storage device 140 stores therein a computer program to be executed by the processor 110, data significant for other operation of the scheduling supporting apparatus 100 and so forth. The computer program stored in the data storage device 140 is loaded into the memory 130 and executed by the processor 110. The data storage device 140 is an electronic device such as a hard disk drive (HDD), a solid state drive (SSD), a mask ROM, a PROM or a flash memory. The inputting device 150 is a device that performs inputting of data and so forth to the scheduling supporting apparatus 100. The inputting device 150 includes, for example, a keyboard or a mouse provided on the scheduling supporting apparatus 100 or a touch panel incorporated in a display unit. A designer of a task may create task information using the task information source 300 or perform inputting of task information directly to the scheduling supporting apparatus 100 using the inputting device 150. The display device 160 is a device that displays, for example, a result of processing performed by the processor 110 and is, for example, a display unit provided on the scheduling supporting apparatus 100. The scheduling supporting apparatus 100 may cause schedules of users to be displayed on the display device 160. The NIC 170 is an expansion device for coupling the scheduling supporting apparatus 100 to the network 500. The scheduling supporting apparatus 100 performs data communication with a different electronic device or an information processing apparatus such as a server through the NIC 170. The data communication may be any of wireless communication and wire communication. The bus 190 couples the devices of the scheduling supporting apparatus 100 such as the processor 110, the memory 130, the data storage device 140, the inputting device 150 and the display device 160 and functions as a path for data transmission between the devices.

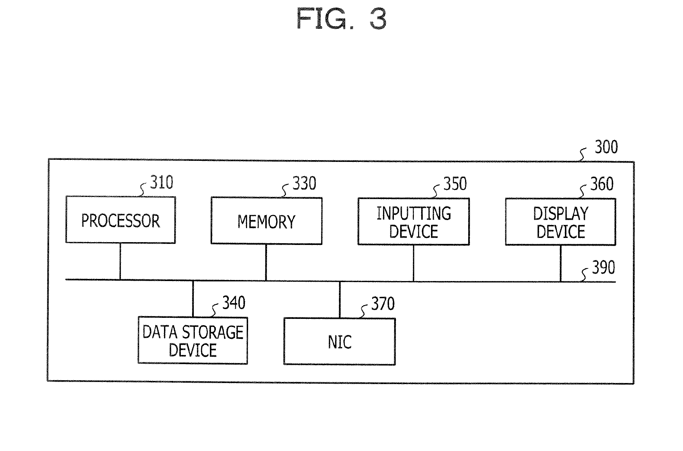

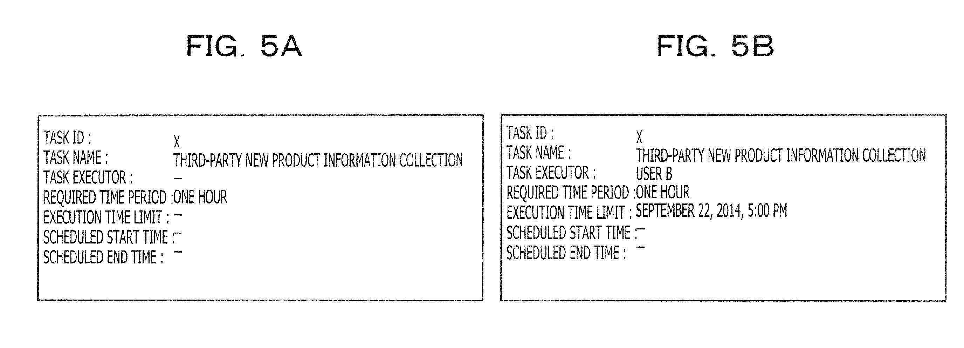

FIG. 3 is a block diagram depicting a hardware configuration of a task information source in the first embodiment. The task information source in FIG. 3 may be the task information source 300 depicted in FIG. 1. The task information source 300 includes a processor 310, a memory 330, a data storage device 340, an inputting device 350, a display device 360, an NIC 370 and a bus 390. The processor 310 performs control of the entire task information source 300, data processing and processing relating to task information creation and so forth. The processor 310 is an electronic circuit part such as a CPU, an MCU, an MPU, a DSP or an FPGA. The memory 330 stores therein data to be used for given processing by the processor 310, resulting data of data processing performed by the processor 310 and so forth. The memory 330 is an electronic circuit part including a volatile memory such as a DRAM or an SRAM and a nonvolatile memory such as a mask ROM, a PROM or a flash memory. The data storage device 340 stores therein a computer program to be executed by the processor 310, data significant for other operation of the task information source 300 and so forth. The computer program stored in the data storage device 340 is loaded into the memory 330 and executed by the processor 310. The data storage device 340 is an electronic device such as an HDD, an SSD, a mask ROM, a PROM or a flash memory. The inputting device 350 is a device that performs inputting of data and so forth to the task information source 300. The inputting device 350 includes, for example, a keyboard or a mouse provided on the task information source 300 or a touch panel incorporated in a display unit. The display device 360 is a device that displays, for example, a result of processing performed by the processor 310 and is, for example, a display unit provided on the task information source 300. The NIC 370 is an expansion device for coupling the task information source 300 to the network 500. The task information source 300 performs data communication with a different electronic device or an information processing apparatus such as a server through the NIC 370. The data communication may be any of wireless communication and wire communication. The bus 390 couples the devices of the task information source 300 such as the processor 310, the memory 330, the data storage device 340, the inputting device 350 and the display device 360 and functions as a path for data transmission between the devices. A designer of a task would specify task information relating to a task to be executed by a particular user and input the task information to the task information source 300 through the inputting device 350. Details of the task information are hereinafter described with reference to FIGS. 5A and 5B and so forth.

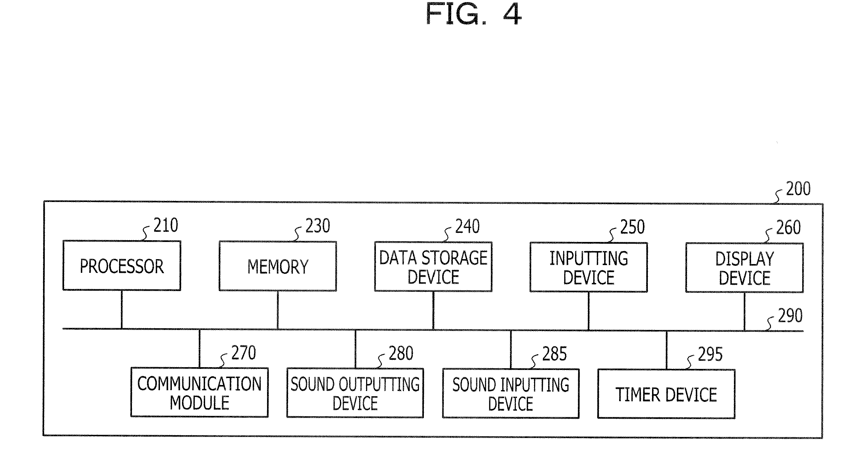

FIG. 4 is a block diagram depicting a hardware configuration of a user interface device in the first embodiment. The user interface device in FIG. 4 may be the user interface device 200 depicted in FIG. 1. The user interface device 200 includes a processor 210, a memory 230, a data storage device 240, an inputting device 250, a display device 260, a communication module 270, a sound outputting device 280, a sound inputting device 285, a timer device 295 and a bus 290. The processor 210 performs control of the entire user interface device 200, data processing and so forth. The processor 210 is an electronic circuit part such as a CPU, an MCU, an MPU, a DSP or an FPGA. The memory 230 stores therein data significant for the processor 210 to perform given processing, resulting data of data processing performed by the processor 210 and so forth. The memory 230 may function as a schedule storage unit that stores a schedule transmitted from the scheduling supporting apparatus 100. The memory 230 is an electronic circuit part such as a DRAM or an SRAM. The data storage device 240 stores therein a computer program to be executed by the processor 210, data significant for other operation of the user interface device 200 and so forth. The data storage device 240 is an electronic device such as an HDD, an SSD, a mask ROM, a PROM or a flash memory. The inputting device 250 is a device that performs inputting of data and so forth to the user interface device 200. The inputting device 250 includes, for example, a keyboard or a mouse provided on the user interface device 200 or a touch panel incorporated in a display unit. The display device 260 is a device that displays, for example, a schedule and so forth transmitted from the scheduling supporting apparatus 100 and is, for example, a display unit provided on the user interface device 200. The communication module 270 is a communication device for performing data communication with a different electronic device or an information processing apparatus such as a server therethrough. The data communication may be any of wireless communication and wire communication. The communication module 270 includes, for example, a wireless circuit, a baseband circuit, an amplification circuit, an antenna and so forth. The sound outputting device 280 is a device that notifies a task executor, for example, of information relating to a schedule transmitted from the scheduling supporting apparatus 100 and associated information by sound and is, for example, a speaker provided on the user interface device 200. The sound inputting device 285 is, for example, a microphone provided on the user interface device 200. The timer device 295 is a device for measuring time used for calculation of a capability index hereinafter described. The bus 290 couples the devices of the user interface device 200 such as the processor 210, the memory 230, the data storage device 240, the communication module 270 and so forth to each other and functions as a path for data transmission between the devices.

FIGS. 5A and 5B are views illustrating task information created by a task information source in the first embodiment. FIG. 5A depicts an example of a task information template stored, for example, in a data storage device of a task information source. The data storage device storing the task information template in FIG. 5A and the task information source including the data storage device may be the data storage device 340 depicted in FIG. 3 and the task information source 300 depicted in FIG. 1, respectively. In the task information template, for example, "task ID," "task name," "task executor," "required time period," "execution time limit," "scheduled start time" and "scheduled end time" are set as items of task information. The "task ID" is information allocated uniquely to each task for specifying the task, and in the example depicted, the task ID is "X." In the following description, this task is referred to as "task X." The "task name" is a name of the task and is preferably determined so as to represent contents of the task concisely so that a task executor can easily recognize the contents of the task. In the example depicted, the task name is "third-party new product information collection." The "task executor" is information for specifying a user who is to execute the task. The "required time period" indicates an aimed period of time taken to execute the task and may be determined using, for example, measured values of the time period taken for execution of the task by a user in the past. In the example depicted, "the required time period" is prescribed as "one hour." The "execution time limit" indicates a time limit before which the task is to be executed, and the designer of the task can register, upon designing of a task, an execution time limit into this item as occasion demands. The "scheduled start time" is scheduled time at which execution of the task is to be started, and the "scheduled end time" is scheduled time at which execution of the task is to be ended.

FIG. 5B exemplifies contents of task information created by a designer of a task using the template for task information depicted in FIG. 5A. The designer of a task would determine a user who is to execute the task X and register the user into the field of the "task executor" of the task information. In the example depicted, the user B is prescribed as the task executor. It is to be noted that there is no necessity to prescribe the name of an individual of the user, who is to execute the task, in the item of the "task executor," but a personal ID of the user, an ID of the user interface device 200 associated with the user or the like may be prescribed. Further, the designer of the task would prescribe a time limit before which the task executor is to execute the task X into the field of the "execution time limit" of the task information. In the example depicted, the execution time limit for the task X is set to "September 22, 2014, 5:00 PM." It is to be noted that, in the present embodiment, at the point of time at which the task is designed, particular time is not prescribed in the items of the "scheduled start time" and the "scheduled end time" of the task information. Particular time of the "scheduled start time" and the "scheduled end time" is set by scheduling by the scheduling supporting apparatus 100 hereinafter described.

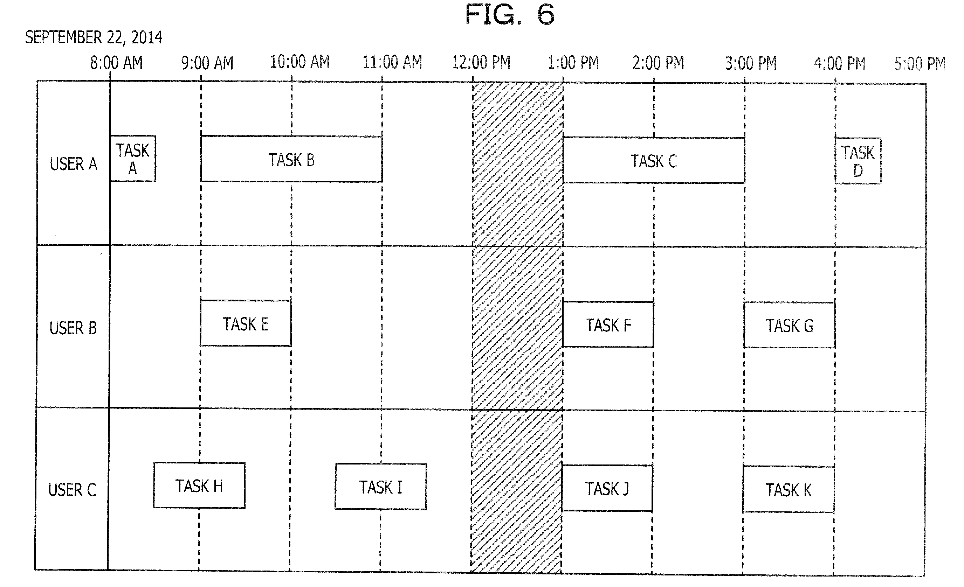

Now, details of a scheduling method according to the first embodiment are described with reference to FIGS. 6 to 14. FIG. 6 is a view depicting an example of a schedule of users in the first embodiment. In particular, FIG. 6 is a view exemplifying contents of a schedule in one day of September 22, 2014 of a user A, user B and user C in the first embodiment. The schedule of the user A prescribes that it is scheduled to execute, on September 22, 2014, a task A within the period from 8:00 to 8:30 AM, a task B within the period from 9:00 AM to 11:00 AM, a task C within the period from 1:00 PM to 3:00 PM and a task D within the period from 4:00 PM to 4:30 PM. The schedule of the user B prescribes that it is scheduled to execute, on September 22, 2014, a task E within the period from 9:00 AM to 10:00 AM, a task F within the period from 1:00 PM to 2:00 PM and a task G within the period from 3:00 PM to 4:00 PM. The schedule of the user C prescribes that it is scheduled to execute, on September 22, 2014, a task H within the period from 8:30 PM to 9:30 PM, a task I within the period from 10:30 AM to 11:30 AM, a task J within the period from 1:00 PM to 2:00 PM and a task K within the period from 3:00 PM to 4:00 PM. It is to be noted that the period from 12:00 PM to 1:00 PM is a period of a noon recess of the users.

In the description of all embodiments disclosed herein including the first embodiment, the scheduling method is described in regard to a case in which, in a state in which the schedules depicted in FIG. 6 are determined already, a new task that becomes a target of scheduling is created. Further, the following description of all embodiments disclosed herein including the first embodiment is given under the assumption that scheduling is executed at the point of time of eight o'clock of September 22, 2014.

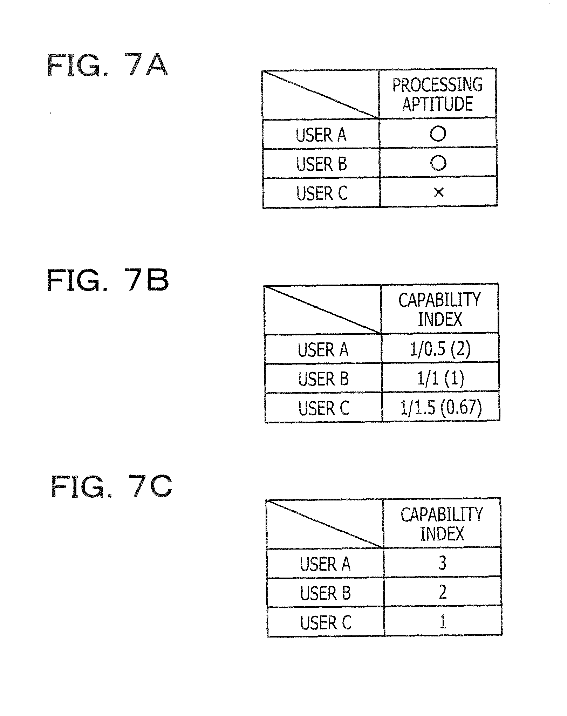

FIGS. 7A to 7C are views illustrating a processing aptitude of users in the first embodiment. FIG. 7A depicts an example of presence or absence of a processing aptitude in users. In the example depicted, it is indicated that the user A and the user B have a processing aptitude and the user A or the user B can become, when the other user becomes a task executor, a supporter of the other user. The presence or absence of a processing aptitude may be determined in advance, for example, by the designer of the task on the basis of the ability of each user in regard to execution of the task, or may be determined on the basis of a relative relationship in ability among the members, as will be described next. Alternatively, the presence or absence of a processing aptitude may be determined, for example, in such a manner that a member belonging to a similar post of the same company has a processing aptitude.

FIG. 7B indicates an example of a capability index of a user. As described hereinabove, the capability index is a value indicative of a height of the capability in execution of a task and is an index used to determine whether or not each member has a processing aptitude. The capability index may be defined as a reciprocal number of a period of time taken for processing of a particular task that is typically processed, for example, in one hour. FIG. 7B indicates an example of the value of the capability index defined in this manner for each user. The user A can process the particular task in 0.5 hours, and the capability index of the user A is determined as "2" that is a reciprocal number of "0.5." The user B can process the particular task in one hour, and the capability index of the user B is determined as "1" that is a reciprocal number of "1." The user C requires 1.5 hours for the process of the particular task, and the capability index of the user C is determined as "0.67" that is a reciprocal number of "1.5." Then, a user having a capability index higher than the capability index of a task executor can become a supporter as a user who has a given processing aptitude. For example, in the example depicted in FIG. 7B, when the user C becomes a task executor, each of the user A and the user B can become a supporter, and when the user B becomes a task executor, the user A can become a supporter.

FIG. 7C is a view depicting an example of capability indices determined, for example, on the basis of work performances of members. In this case, the capability indices are determined, for example, by a manager for the plurality of users taking not only a time period taken for task execution but also the quality of outcomes obtained by the task execution and so forth into consideration. In the example depicted, the capability index of the user A is determined as "3"; the capability index of the user B is determined as "2"; and the capability index of the user C is determined as "1." Also in the example depicted, a user having a higher capability index than the capability index of a task executor can become a supporter as a user who has a given processing aptitude. The information depicted in FIGS. 7A, 7B and 7C is referred to as "processing aptitude information."

In the description of all embodiments disclosed herein including the first embodiment, the scheduling method is described assuming that a supporter is specified on the basis of the processing aptitudes determined using the capability indices depicted in FIG. 7B.

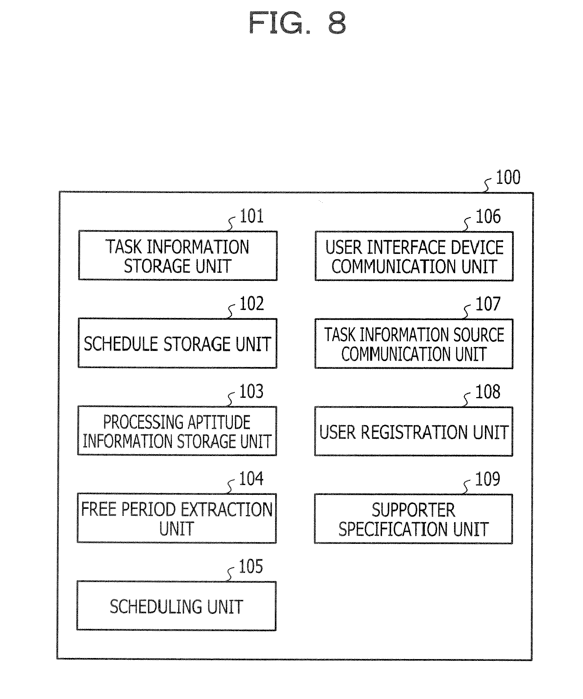

FIG. 8 is a functional block diagram of a scheduling supporting apparatus in the first embodiment. The scheduling supporting apparatus in FIG. 8 may be the scheduling supporting apparatus 100 depicted in FIG. 1. When the processor 110 of the scheduling supporting apparatus 100 executes a computer program stored in the data storage device 140 or the like, the scheduling supporting apparatus 100 functions as various components. In particular, the scheduling supporting apparatus 100 functions as a task information storage unit 101, a schedule storage unit 102, a processing aptitude information storage unit 103, a free period extraction unit 104, a scheduling unit 105, a user interface device communication unit 106, a task information source communication unit 107, a user registration unit 108 and a supporter specification unit 109. The task information storage unit 101 stores therein task information of a task which becomes a target of scheduling, namely, a task for which a scheduled execution period is not determined. The task information stored in the task information storage unit 101 may be transmitted from the task information source 300, inputted from the inputting device 150 provided on the scheduling supporting apparatus 100 or transmitted from the user interface device 200. Where the task information is transmitted from the user interface device 200, the task executor itself may create task information, write the task information into the user interface device 200 and request the scheduling supporting apparatus 100 to perform scheduling.

The schedule storage unit 102 stores therein task information for which a scheduled execution period is determined. The task information for which a scheduled execution period is determined is, for example, task information for which a scheduled execution period is determined by scheduling performed by the scheduling unit 105 hereinafter described from within the task information stored in the task information storage unit 101. Alternatively, the task information for which a scheduled execution period for a task is determined by the task executor itself and which is stored in a schedule notebook or the like in the user interface device 200 may be acquired and stored by the schedule storage unit 102. The schedule storage unit 102 has schedules of the users stored therein. The processing aptitude information storage unit 103 stores therein processing aptitude information such as a processing aptitude of the users, a capability indices of the users and so forth. It is to be noted that the processing aptitude information stored in the processing aptitude information storage unit 103 need not have such a data structure of a tabular form that can be visually recognized as depicted in FIG. 7A, 7B or 7C.

The free period extraction unit 104 refers to the schedules of the task executors and the supporter stored in the schedule storage unit 102 to extract free periods in the schedule. The scheduling unit 105 specifies an overlapping period in which a free period in the schedule of the task executor and a free period in the schedule of the supporter overlap with each other and determines a scheduled execution period for the task so as to include at least part of the overlapping period.

The user interface device communication unit 106 communicates with the user interface device 200. For example, the user interface device communication unit 106 transmits a schedule for a task created by the scheduling unit 105 to the user interface device 200. The user interface device communication unit 106 may receive feedback information from the task executor with regard to contents of the schedule transmitted to the user interface device 200 from the user interface device 200. Details of the feedback information are hereinafter described.

The task information source communication unit 107 communicates with the task information source 300. For example, the task information source communication unit 107 receives task information transmitted from the task information source 300. The task information source communication unit 107 may notify the task information source 300 of a definitely determined scheduled execution period after the scheduled execution period for the task is definitely determined. The user registration unit 108 registers the task executor and a person or persons who can become a supporter for the task executor as group members. For example, all members belonging to a particular post in a company may be registered as group members, or a plurality of company employees having common knowledge in work in different posts may be registered as group members. It is to be noted that the registration of a user may be performed by the designer of the task or the task executor directly accessing the scheduling supporting apparatus 100 using the inputting device 150 of the scheduling supporting apparatus 100. Alternatively, the designer of the task may access the scheduling supporting apparatus 100 through the task information source 300 to perform registration of a user. A plurality of groups may be registered in the user registration unit 108, and users who are different among different groups may be registered as group members. The supporter specification unit 109 accesses the processing aptitude information storage unit 103 to specify a user having a given processing aptitude, for example, a user having a capability index higher than the capability index of the task executor, as a supporter.

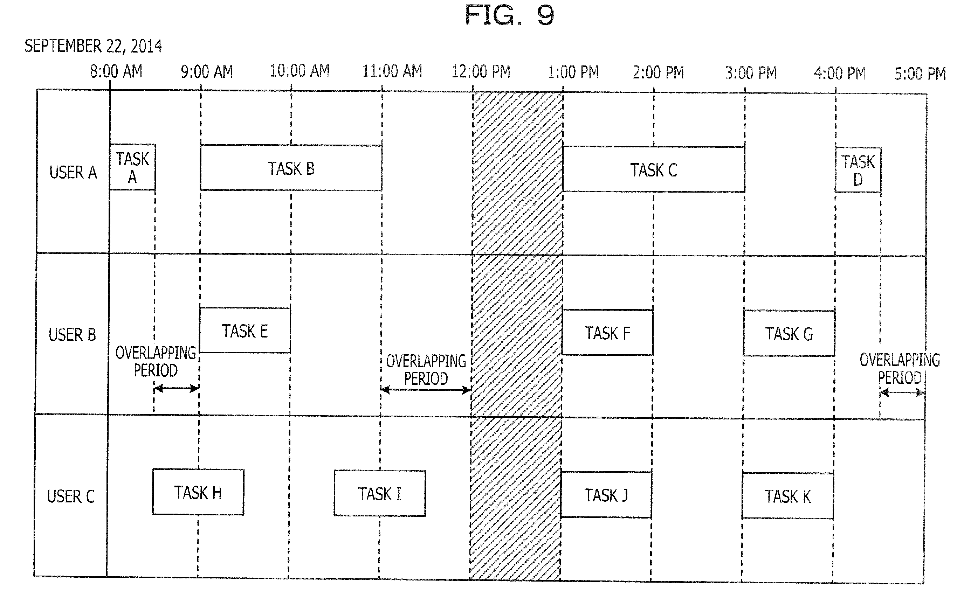

A scheduling method and a scheduling result according to the first embodiment are described with reference to FIGS. 9 to 13. Here, the scheduling method for the task X depicted in FIG. 5B is described. Here, it is assumed that the user A, user B and user C are registered as members of a particular group in the user registration unit 108 and, at a point of time at which scheduling for the task X is performed, the schedules of contents depicted in FIG. 6 are determined already for the users. Also, it is assumed that, for the specification of a supporter, the capability indices depicted in FIG. 7B are used.

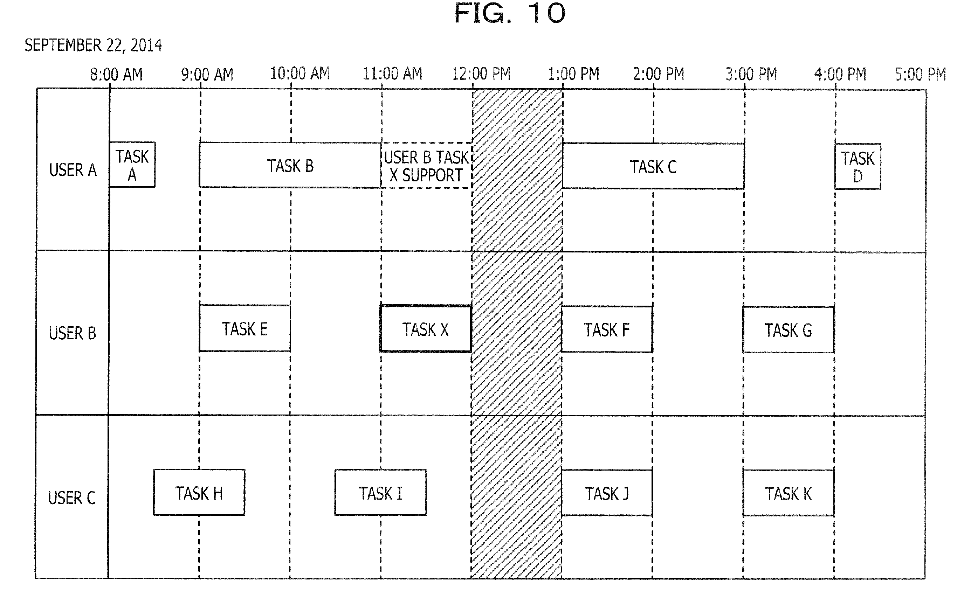

As depicted in FIG. 5B, in the task information for the task X, the user B is determined as the task executor. As depicted in FIG. 7B, the user A is determined as a user having a higher capability index than the capability index of the user B. In this case, the supporter specification unit 109 specifies the user A as a supporter for execution of the task X by the user B. Then, the free period extraction unit 104 extracts free periods from the schedule of the user B who is the task executor and extracts free periods also from the schedule of the user A who is the supporter. Then, the scheduling unit 105 specifies the overlapping period in which both of the free periods overlap with each other. In FIG. 9, free periods of the schedule of the user A and the schedule of the user B indicate overlapping periods on September 22, 2014 including a period from 8:30 AM to 9:00 AM, another period from 11:00 AM to 12:00 PM, and a further period from 4:30 PM to 5:00 PM. The scheduling unit 105 specifies a required time period for the task X on the basis of the task information of the task X stored in the task information storage unit 101 and specifies an overlapping period that is equal to or longer than the required time period. As depicted in FIG. 5B, the required time period for the task X is one hour. Meanwhile, from among the overlapping periods depicted in FIG. 9, the overlapping period from 11:00 AM to 12:00 PM is determined as the overlapping period equal to or longer than one hour. Assume that the overlapping period from 11:00 AM to 12:00 PM on September 22, 2014 is the scheduled execution period for the task X, the scheduling unit 105 decides on the basis of the task information of the task X whether or not the task X is performed before the execution time limit. In the task information depicted in FIG. 5B, the execution time limit for the task X is determined as "September 22, 2014, 5:00 PM." Therefore, the scheduled execution period determined so that execution of the task X ends on September 22, 2014, 12:00 PM satisfies the condition for the execution time limit for the task X. Therefore, the scheduling unit 105 definitely determines the scheduled start time for the task X as September 22, 2014, 11:00 AM and the scheduled end time for the task X as September 22, 2014, 12:00 PM. FIG. 10 is a view depicting contents of schedules set in this manner.

In this manner, a scheduled execution period for the task X to the task executor is determined taking not only a free period in the schedule of the task executor but also a free period in the schedule of the supporter into consideration. The task executor of the task X can ask a question to the supporter during execution of the task X by executing the task along the determined schedule or request the supporter for cooperation regarding execution of the task. It is to be noted that, when a plurality overlapping periods are available as a candidate for a scheduled execution period for the task, for example, the earliest one of the plurality of overlapping periods may be selected and set as the scheduled execution period for the task. Further, the scheduling supporting apparatus 100 may notify the user A through the user interface device 200a that a free period in the schedule of the user A is referred to in the scheduling for the task X of the user B. Consequently, the user A can know that there is the possibility that the user A may be consulted by the user B about the task X within the period from 11:00 AM to 12:00 PM on September 22, 2014. As the notification method to the user A, a method is available as an example wherein information indicating that supporting for the task X by the user B is scheduled is annexed to the period from 11:00 AM to 12:00 PM on September 22, 2014 on the schedule of the user A and is transmitted from the scheduling supporting apparatus 100 to the user interface device 200a. In this case, the user interface device 200a causes the display device 260 to display a schedule table of contents corresponding to FIG. 10.

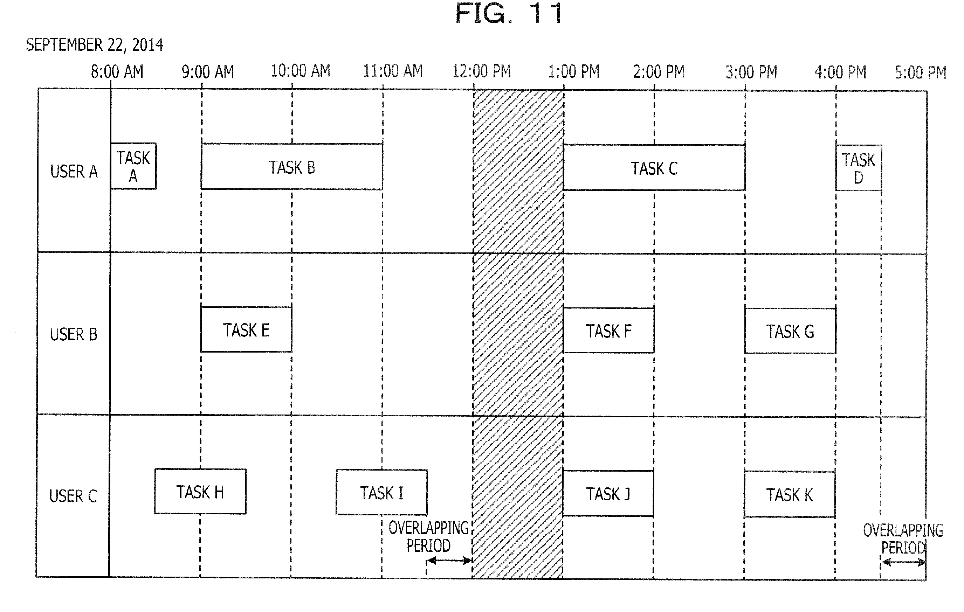

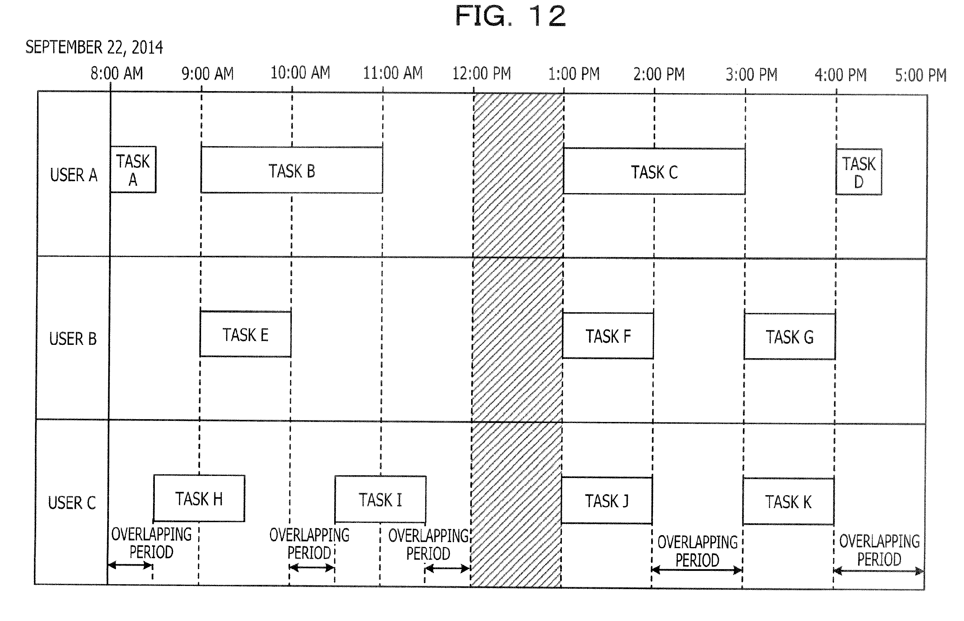

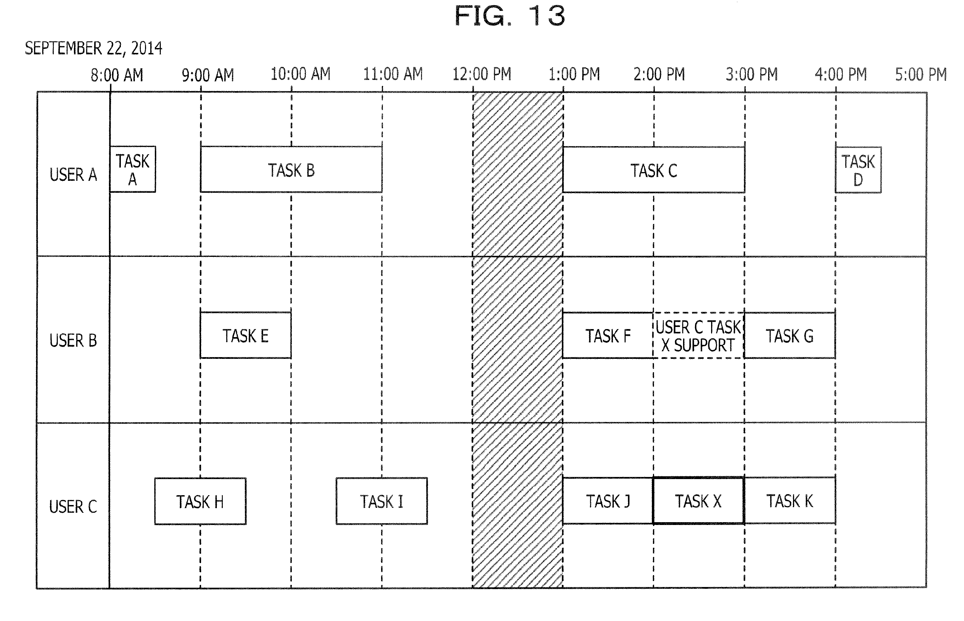

In FIGS. 9 and 10, a case is depicted wherein the task executor is the user B and the number of persons who can become a supporter among the users is only one person, namely, the user A. Now, a scheduling method is described in regard to another case in which the users include a plurality of persons who can become a supporter. In the example depicted, it is assumed that, though not depicted, the user C is prescribed as the task executor of the task X. As depicted in FIG. 7B, two users including the user A and the user B have a capability index higher than a capability index of the user C. Where a plurality of persons have a capability index higher than a capability index of the task executor, namely, where a plurality candidates who can become a supporter are available, the supporter specification unit 109 specifies, from among the plurality of candidates for a supporter, the candidate who has the highest capability index. In the example depicted in FIG. 7B, the user A is selected as a candidate for a supporter. Then, the scheduling unit 105 performs scheduling on the basis of free periods in the schedule of the user C and the free periods in the schedule of the user A. As depicted in FIG. 11, as an overlapping period between a free period in the schedule of the user C and a free period in the schedule of the user A, the period from 11:30 AM to 12:00 PM and the period from 4:30 PM to 5:00 PM on September 22, 2014 are available. However, both overlapping periods are shorter than one hour that is the required time period for the task X. Therefore, the scheduling unit 105 decides that, if the user A is determined as a supporter, then such scheduling that the task X is executed before September 22, 2014, 5:00 PM that is the execution time limit for the task X is not be performable. In this case, the supporter specification unit 109 specifies the user B who has the highest capability index next to the user A as a candidate for a supporter. Then, the scheduling unit 105 performs scheduling on the basis of free periods in the schedule of the user C and free periods in the schedule of the user B. As depicted in FIG. 12, as an overlapping period between a free period in the schedule of the user C and a free period in the schedule of the user B, five periods on September 22, 2014 are available including the period from 8:00 AM to 8:30 AM, the period from 10:00 AM to 10:30 AM, the period from 11:30 AM to 12:00 PM, the period from 2:00 PM to 3:00 PM and the period from 4:00 PM to 5:00 PM. As a period that is equal to or longer than one hour that is the required time period for the task X from among the five periods, two periods on September 22, 2014 are available including the period from 2:00 PM to 3:00 PM and the period from 4:00 PM to 5:00 PM. The two overlapping periods satisfy the requirement for the execution time limit for the task X which is September 22, 2014, 5:00 PM. Then, the scheduling unit 105 specifies the period from 2:00 PM to 3:00 PM on September 22, 2014, which is the earlier one of the two periods, as a scheduled execution period for the task X. FIG. 13 depicts a schedule of the users including the scheduled execution period for the task X scheduled in such a manner as just described. It is to be noted that, since, in the example depicted, the user B is selected finally as the supporter, the scheduling result for the task X of the user C may be conveyed to the user B through the user interface device 200b.

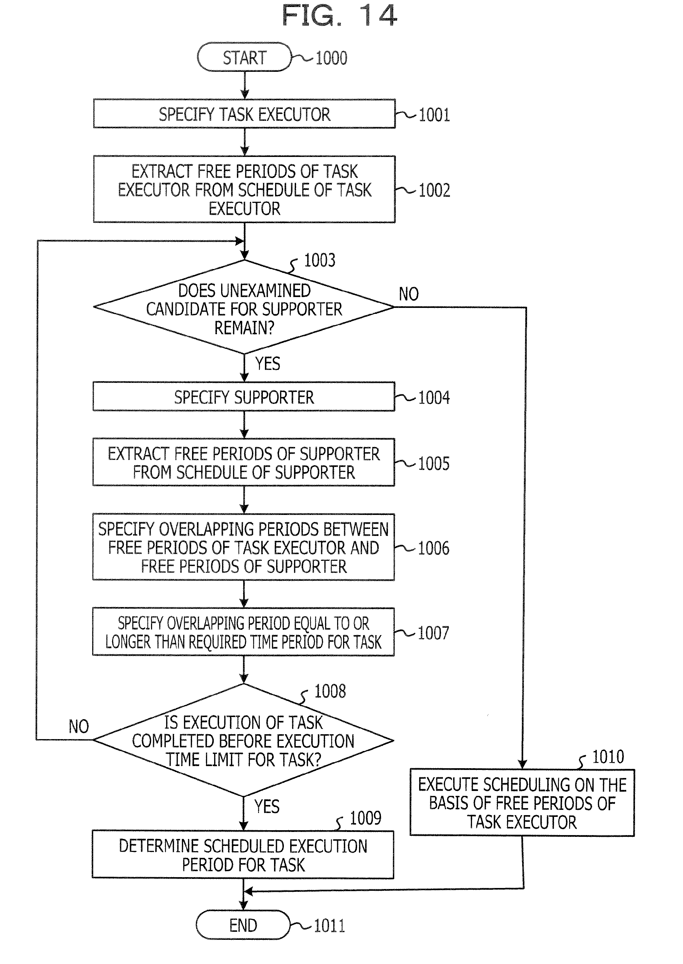

FIG. 14 is a flow chart of a scheduling process performed by a scheduling supporting apparatus according to the first embodiment. The scheduling supporting apparatus performing the scheduling process in FIG. 14 may be the scheduling supporting apparatus 100 depicted in FIG. 1. The scheduling process is started in process 1000, and in process 1001, the scheduling unit 105 specifies a task executor on the basis of the task information stored in the task information storage unit 101. In process 1002, the free period extraction unit 104 extracts free periods from within the schedule of the task executor stored in the schedule storage unit 102. In process 1003, the supporter specification unit 109 determines whether or not a user remains who has not yet been examined as a candidate for a supporter in the scheduling. If it is determined in process 1003 that an unexamined candidate for a supporter remains, then the processing advances to process 1004, but if it is determined that no unexamined candidate for a supporter remains, then the processing advances to process 1010. The process 1010 is hereinafter described. In process 1004, the supporter specification unit 109 specifies a supporter on the basis of the processing aptitude information stored in the processing aptitude information storage unit 103. In process 1005, the free period extraction unit 104 extracts free periods in the schedule of the supporter stored in the schedule storage unit 102. In process 1006, the scheduling unit 105 specifies overlapping periods in which free periods in the schedule of the task executor and free periods in the schedule of the supporter extracted by the free period extraction unit 104 overlap with each other. In process 1007, the scheduling unit 105 specifies an overlapping period including a period equal to or longer than the required time period for the task from among the overlapping periods specified in process 1006. In process 1008, the scheduling unit 105 determines whether or not, when the task is executed within the specified overlapping period, the execution of the task is completed before the execution time limit for the task. In process 1108, if it is determined that the execution of the task is completed before the execution time limit for the task, then the processing advances to process 1009, but if it is determined that the execution of the task is not completed before the execution time limit for the task, then the processing returns to process 1003. In process 1009, the scheduling unit 105 determines the scheduled execution period for the task, and the processing is ended in process 1011. On the other hand, if the processing advances from process 1003 to process 1010, then the scheduling unit 105 performs, in process 1010, scheduling for the task on the basis of the free periods in the schedule of the task executor without determining any other user as a supporter. Thereafter, the processing is ended in process 1011.

In this manner, in the description of the first embodiment, an example wherein a scheduled execution period for a task is set to an overlapping period between a free period in the schedule of the task executor and a free period in the schedule of a supporter having a given processing aptitude is described. In the following, supplementary description regarding the first embodiment is given.

### (Determination whether or not supporting is desired)

While the first embodiment is directed to an example wherein a user having a given processing aptitude is specified as a supporter, it is not necessary to specify a supporter for all tasks. For example, when a designer of a task creates certain task information, if it can be decided that there is no necessity to set a supporter taking contents of the task, the capability of the task executor and so forth into consideration, a prescription that there is no necessity for supporting by a supporter may be provided in the task information. Where the task information includes the prescription that there is no necessity for supporting, the scheduling unit 105 executes scheduling for the task on the basis of a free period in the schedule of the task executor without specifying a supporter. The case in which the prescription that there is no necessity for supporting is included in the task information is hereinafter described by way of an example also in the description of a second embodiment given hereinbelow.

### (How to determine a capability index)

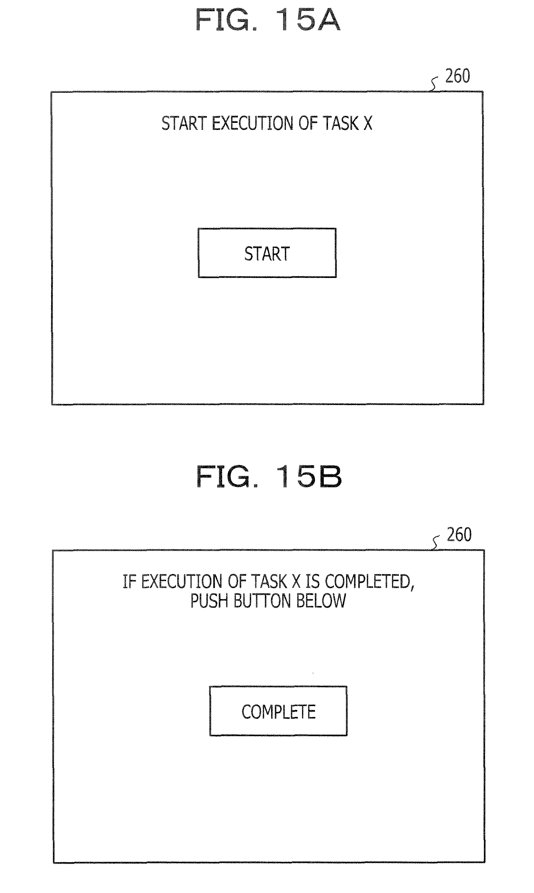

In the example depicted in FIG. 7B, a capability index is determined on the basis of the period of time taken for each user to execute a task. For the time taken for execution of a task, a time period estimated to be taken for execution of a task by each user may be used, or an actually measured value of the time period taken for execution of a same or similar task in the past may be used. As an example of the method for actually measuring the time taken for execution of a task, a method that uses the timer device 295 included in the user interface device 200 is applicable. For example, as depicted in FIG. 15A, a "start" button that is selected when a task is to be started is displayed on the display device 260 of the user interface device 200. Where a touch panel is used as the inputting device 250, if the task executor touches with the position of the touch panel corresponding to the displayed position of the "start" button when executing a task, then counting of time by the timer device 295 is started. Where the task is executed making use of the user interface device 200, a tool to be used for the execution of the task may be started on the display device 260 in response to the touch with the button. Further, as depicted in FIG. 15B, a "complete" button that is selected when a task executor completes the task is displayed on the display device 260 of the user interface device 200. Where a touch panel is used as the inputting device 250, if the task executor touches with the position of the touch panel corresponding to the displayed position of the "complete" button, then the period of time from the point of time at which the "start" button is touched to the point of time at which the "complete" button is touched is conveyed from the user interface device 200 to the scheduling supporting apparatus 100 and is utilized for calculation of a capability index.

### (Task type)

The processing aptitude information depicted in FIGS. 7A, 7B and 7C may be information created for each task. However, if processing aptitude information is created for each task, then also the creation process of processing aptitude information increases as the number of types of tasks increases, or when a new task that has not been carried out in the past is generated, scheduling based on mediation is not performable. Taking them into consideration, a task type that is a concept including a plurality of kinds of tasks is determined on the basis of contents, type and so forth of a task, and processing aptitude information is determined for each task type. As the task type, a task type belonging to a type of physical labor such as, for example, a carrying work or a packaging work and a task type belonging to a type of intellectual labor such as, for example, a "document preparation work" or an "information retrieval work" are available as examples. Alternatively, such a task type as, for example, a "PC work" or a "prober work" may be set on the basis of a type of a device or a tool used when the task is executed. Then, by placing information for specifying a task type into the task information, the scheduling supporting apparatus 100 specifies processing aptitude information to be used on the basis of the task type of the task that is a target of scheduling. As the information for specifying a task type to be included in the task information, information that directly designates a task type, information for use to specify a task type, for example, information indicative of a type of a device or a tool to be used when the task is executed and so forth are available.

By setting a task type in this manner, processing aptitude information may not be created for each task, and also when a new task that has not been carried out in the past is generated, scheduling based on mediation is performed.

### <Second Embodiment>

In the description of the first embodiment, the scheduling method is described where a task prescribed by task information designed by a designer of the task is independent of any other task. In the description of a second embodiment, a scheduling method is described where task information designed by a designer of a task relates to a plurality of tasks having relevance to each other. It is to be noted that the second embodiment and all of the other embodiments hereinafter described are implemented utilizing the system configuration of the first embodiment described hereinabove with reference to FIG. 1, the hardware configuration of the scheduling supporting apparatus 100 of the first embodiment described hereinabove with reference to FIG. 2, the hardware configuration of the user interface device 200 of the first embodiment described hereinabove with reference to FIG. 3, the hardware configuration of the task information source 300 of the first embodiment described hereinabove with reference to FIG. 4 and the functional block configuration of the scheduling supporting apparatus 100 of the first embodiment described hereinabove with reference to FIG. 8.

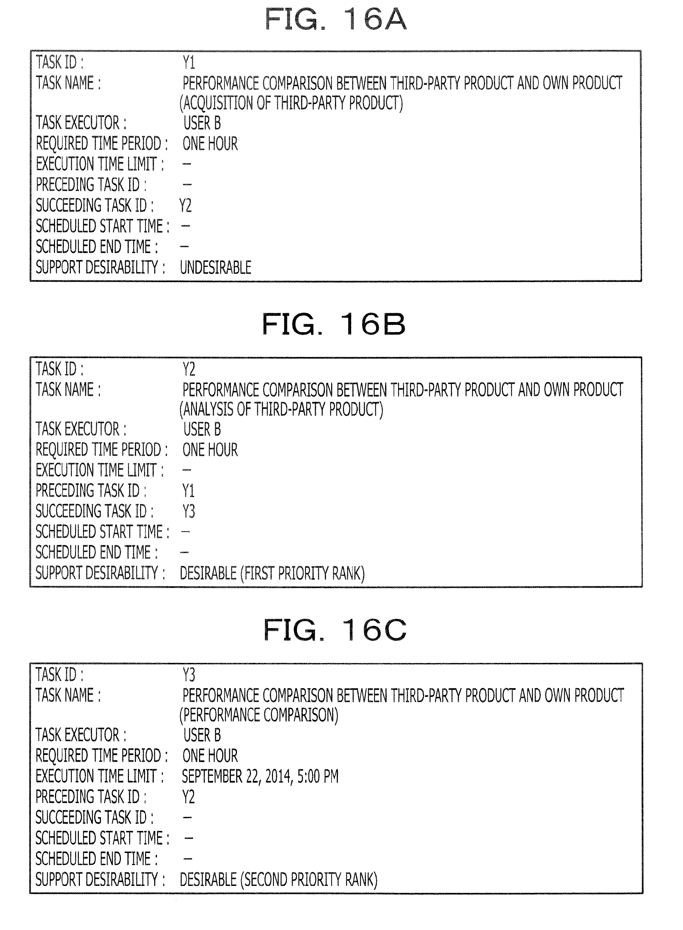

In order to describe an example in which a plurality of tasks have relevance to each other, description is given here using an example wherein a task executor performs a work of comparing performance of a third-party product and performance of an own product with each other. The task executor would execute, in order to perform comparison in performance between a third-party product and an own product, a step of acquiring a third-party product that becomes a target, a step of analyzing the acquired third-party product to investigate the performance, and a step of comparing the performance of the third-party product obtained by the investigation with a performance of an own product. In other words, as the task for "third-party product acquisition," task for "third-party product analysis" and task for "performance comparison" are executed, whereby a cohesive task for "performance comparison between a third-party product and an own product" is executed. In the following, a scheduling method for a plurality of tasks having relevance to each other is described with reference to FIGS. 16A to 19.

FIGS. 16A, 16B and 16C are views depicting task information of a task for "third-party product acquisition," task for "third-party product analysis" and task for "performance comparison," respectively. FIG. 16A depicts task information of the task for acquiring a third-party product. The task ID is prescribed as "Y1"; the task name as "performance comparison between third-party product and own product (third-party product acquisition)"; the task executor as "user B"; and the required time period as "one hour." In the following description, the task is referred to as "task Y1." The task information of the task Y1 has provided therein an item of the "support desirability" described hereinabove in the supplementary description of the first embodiment. In the example depicted, it is assumed that the designer of the task determines that the user B can execute acquisition of a third-party product even if the user B is not supported by any other user and the item of the support desirability is prescribed to "undesirable." In the task information of the task Y1, items that prescribe a "preceding task ID" and a "succeeding task ID" are provided further. The "preceding task ID" signifies a task ID of a task that is a different relevant task and is executed earlier than the task Y1. The "succeeding task ID" signifies a task ID of a task that is a different relevant task and is executed later than the task Y1. In the example depicted, the succeeding task ID is prescribed to "Y2." Now, task information of the task whose task ID is "Y2" is described.

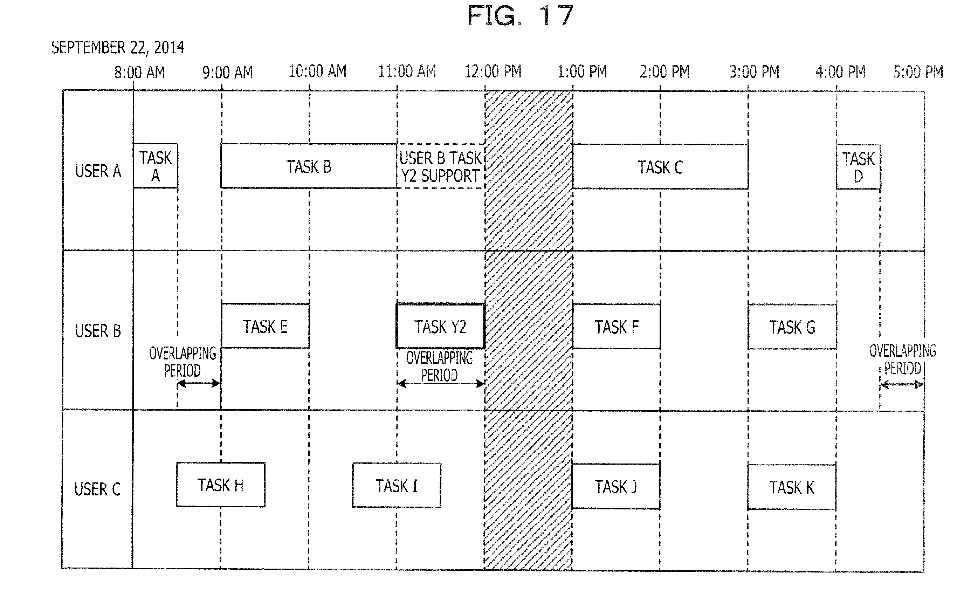

FIG. 16B depicts task information of the task for analyzing a third-party product. The task ID is prescribed as "Y2"; the task name as "performance comparison between third-party product and own product (analysis of third-party product)"; the task executor as "user B"; and the required time period as "one hour." In the following description, the task is referred to as "task Y2." In the task information of the task Y2, the support desirability is prescribed as "desirable"; the preceding task ID as "Y1"; and the succeeding task ID as "Y3." It is to be noted that, as depicted in FIG. 16B, in the example depicted, the item of the support desirability is prescribed as "first priority rank." The utilization method of information of the priority is hereinafter described with reference to FIG. 17. Now, the task information whose task ID is "Y3" is described.

FIG. 16C depicts task information of the task for comparing a third-party product and an own product with each other in performance. The task ID is prescribed as "Y3"; the task name as "performance comparison between third-party product and own product (performance comparison)"; the task executor as "user B"; the required time period as "one hour"; and the execution time limit as "September 22, 2014, 5:00 PM." In the following description, the task is referred to as "task Y3." In the task information of the task Y3, the support desirability is prescribed as "desirable"; and the preceding task ID as "Y2." It is to be noted that, as depicted in FIG. 16C, in the example depicted, the item of the support desirability is prescribed as "second priority rank."

The task executed last from among the three tasks is the task Y3, and since an execution time limit is determined for the task Y3, the scheduled execution periods for the other two preceding tasks are set such that the execution of the task Y3 is completed before the execution time limit.

First, the scheduling unit 105 specifies a task for which it is demanded to set a supporter on the basis of the three pieces of task information depicted in FIGS. 16A to 16C. In the example depicted, the items of the support desirability in the task Y2 and the task Y3 are prescribed as "desirable." Then, the scheduling unit 105 refers to priority ranks prescribed in the item of the support desirability in the task information of each of the task Y2 and the task Y3. The priority ranks are information indicative of degrees of the desirability for setting a supporter. In the example depicted, it is demanded that execution of a plurality of relevant tasks be performed before a given execution time limit and besides a plurality of tasks exist which are demanded to set a supporter. In such a case as just described, it may not be able to execute scheduling in which a supporter is specified for each of a plurality of tasks while the condition for an execution time limit is satisfied. Therefore, for which one of a plurality of tasks that demand setting of a supporter scheduling by mediation is to be executed preferentially is determined on the basis of the priority ranks prescribed in the item of the support desirability. In the example depicted in FIGS. 16A to 16C, since the task Y2 is prescribed to the first priority rank and the task Y3 is prescribed to the second priority rank, the scheduling unit 105 performs scheduling by mediation first for the task Y2.

FIG. 17 is a view illustrating a scheduling method and a scheduling result according to the second embodiment for the task Y2. Only the period from 11:00 AM to 12:00 PM on September 22, 2014 is an overlapping period within which a free period in the schedule of the user B who is the task executor and a free period in the schedule of the user A who is to become a supporter overlap with each other and which is equal to or longer than one hour that is the required time period for the task Y2. Therefore, the scheduling unit 105 temporarily determines the scheduled execution period for the task Y2 to the period from 11:00 AM to 12:00 PM on September 22, 2014. In this state, the scheduling unit 105 confirms whether or not a free period sufficient to allow the task Y1, which is the preceding task to the task Y2, to be executed is assured within a period preceding to the scheduled start time of the task Y2. Further, the scheduling unit 105 confirms whether or not a free period sufficient to allow the task Y3, which is the succeeding task to the task Y2, to be executed is assured within a period later than the scheduled end time of the task Y2 but preceding to the execution time limit for the task Y3. In FIG. 17, since the period within which the task Y1 is to be executed and the period within which the task Y3 is executed are assured, the scheduling unit 105 definitely determines the scheduled execution period for the task Y2 to the period from 11:00 AM to 12:00 PM on September 22, 2014. At this point of time, the scheduled execution period for the task Y1 and the task Y3 is not determined as yet.

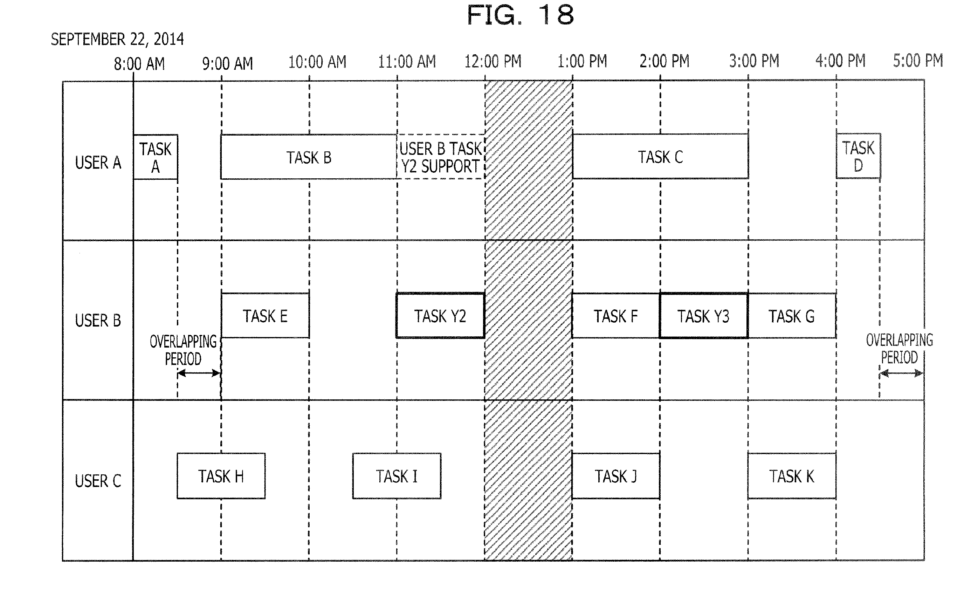

Then, the scheduling unit 105 performs scheduling by mediation for the task Y3 having the second priority rank. FIG. 18 is a view illustrating a scheduling method and a scheduling result according to the second embodiment for the task Y3. Only the period from 4:30 PM to 5:00 PM on September 22, 2014 is an overlapping period within which a free period in the schedule of the user A who is the supporter and a free period in the schedule of the user B who is the task executor overlap with each other and which is later than the scheduled end time for the task Y2 but is earlier than the execution time limit for the task Y3. Since this period is shorter than one hour that is the required time period for the task Y3, it is not suitable to set the period as the scheduled execution period for the task Y3. Therefore, the scheduling unit 105 sets a scheduled execution period on the basis of a free period in the schedule of the user B without setting any supporter for the task Y3. As a free period in the schedule of the user B included in a period between the scheduled end time of the task Y2 and the execution time limit for the task Y3, two periods including the period from 2:00 PM to 3:00 PM and the period from 4:00 PM to 5:00 PM on September 22, 2014 are available. The scheduling unit 105 sets the period from 2:00 PM to 3:00 PM on September 22, 2014 which is the earlier one of the two periods as the scheduled execution period for the task Y3. At this point of time, the scheduled execution period for the task Y1 is not determined as yet.

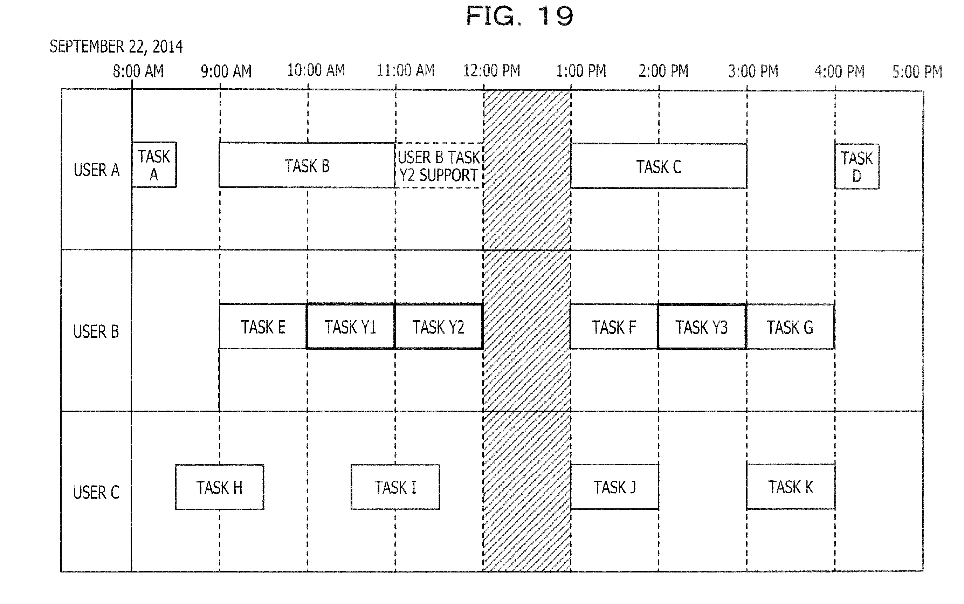

Finally, the scheduling unit 105 performs scheduling for the task Y1. FIG. 19 is a view illustrating a scheduling method and a scheduling result according to the second embodiment for the task Y1. Since the item of the support desirability in the task information of the task Y1 is prescribed to "undesirable," the scheduling unit 105 performs scheduling for the task Y1 on the basis of a free period in the schedule of the user B who is the task executor irrespective of free periods in the schedule of any other user. As the free period in the schedule of the user B which is earlier than the scheduled start time of the task Y2, two periods on September 22, 2014 are available including the period from 8:00 AM to 9:00 AM and the period from 10:00 AM to 11:00 AM. Here, the scheduling unit 105 sets the period from 10:00 AM to 11:00 AM on September 22, 2014 as the scheduled execution period for the task Y1 taking the continuity with execution of the task Y2 that is the succeeding task to the task Y1 into consideration.

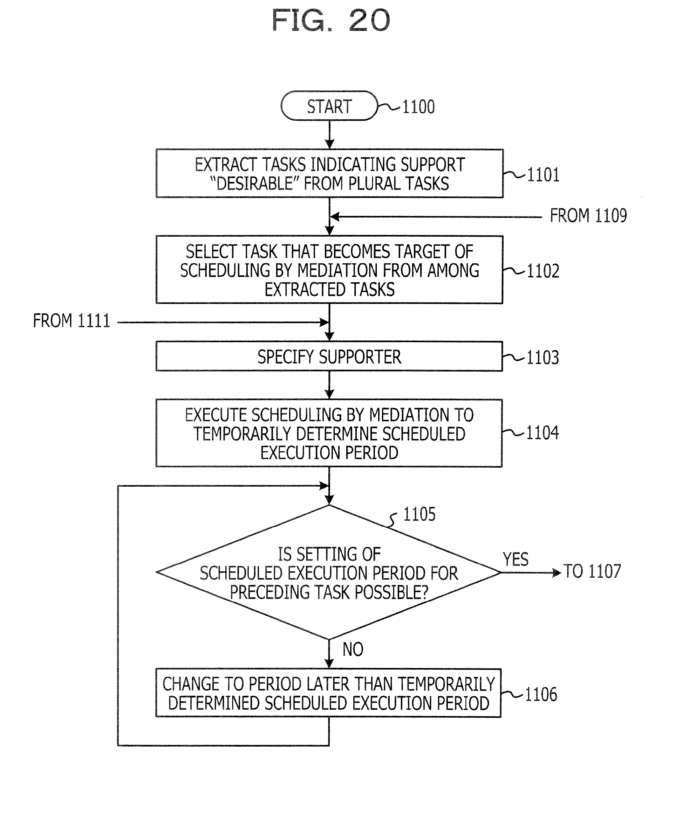

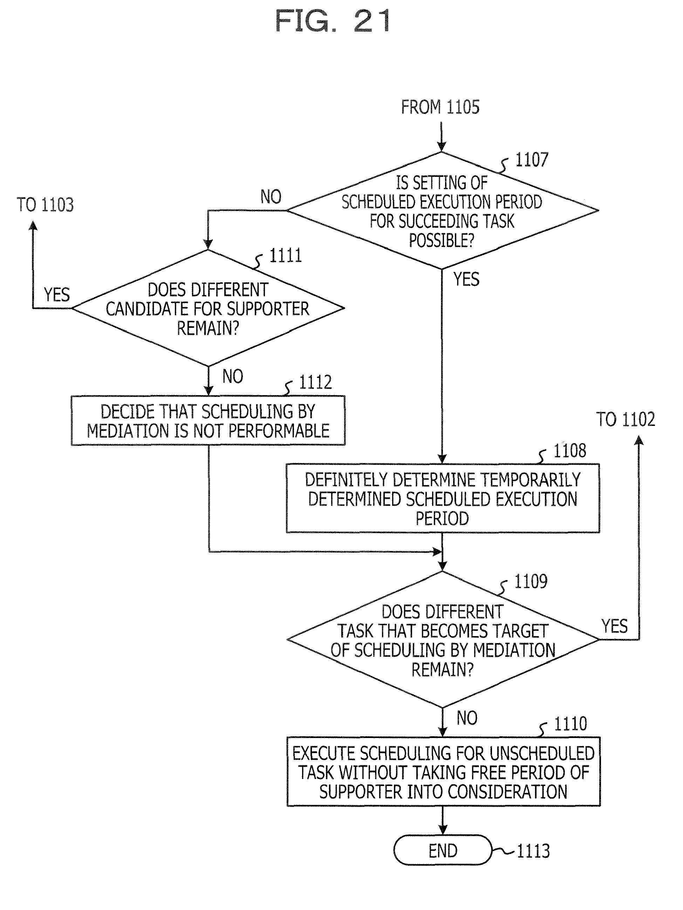

FIGS. 20 and 21 are processing flow charts of a scheduling supporting apparatus in the second embodiment. The scheduling supporting apparatus performing processes in FIGS. 20 and 21 may be the scheduling supporting apparatus 100 depicted in FIG. 1. The processing by the scheduling supporting apparatus 100 is started in process 1100, and in process 1101, the supporter specification unit 109 extracts, from a plurality of tasks, tasks with regard to which "desirable" is prescribed in the item of the support desirability of the task information. In process 1102, the supporter specification unit 109 selects a task that becomes a target of scheduling by mediation from among the extracted tasks. In process 1103, the supporter specification unit 109 specifies a supporter on the basis of the processing aptitude information of the users stored in the processing aptitude information storage unit 103. In process 1104, the scheduling unit 105 performs scheduling by mediation for the task selected in process 1102 to temporarily determine a scheduled execution period for the task. In process 1105, the scheduling unit 105 determines whether or not it is possible to set the scheduled execution period for a preceding task to the task specified in process 1102 to a period preceding to the scheduled execution period temporarily determined in process 1104. In this determination, the required time period for the preceding task, free periods in the schedule of the task executor and so forth are taken into consideration. If it is determined in process 1105 that the scheduled execution period for the preceding task is not settable to a period prior to the scheduled execution period temporarily determined in process 1104, then the processing advances to process 1106. However, if it is decided in process 1105 that the scheduled execution period for the preceding task can be set to a period prior to the scheduled execution period temporarily determined in process 1104, then the processing advances to process 1107. In process 1106, the scheduling unit 105 changes the scheduled execution period temporarily determined in process 1104 to a later period, whereafter the processing returns to process 1105. In process 1107, the scheduling unit 105 determines whether or not the scheduled execution period for a succeeding task to the task specified in process 1102 can be set to a period that is later than the scheduled execution period temporarily determined in process 1104 but is earlier than the execution time limit for the succeeding task. In this determination, the required time period for the succeeding task, free periods in the schedule of the task executor and so forth are taken into consideration. If it is decided in process 1107 that the scheduled execution period for the succeeding task is not settable to a period that is later than the scheduled execution period temporarily determined in process 1104 but is earlier than the execution time limit for the succeeding task, then the processing advances to process 1111. The processing in process 1111 is hereinafter described. On the other hand, if it is decided in process 1107 that the scheduled execution period for the succeeding task can be set to a period that is later than the scheduled execution period temporarily determined in process 1104 but is earlier than the execution time limit for the succeeding task, then the processing advances to process 1108. In process 1108, the scheduling unit 105 definitely determines the scheduled execution period temporarily determined in process 1104 as the scheduled execution period for the task. Then, in process 1109, the scheduling unit 105 determines whether or not there remains a different task that becomes a target of scheduling by mediation. If it is determined in process 1109 that there remains a different task that becomes a target of scheduling by mediation, then the processing returns to process 1102, and scheduling by mediation for the different task is executed successively. If it is determined in process 1109 that there remains no different task that becomes a target of scheduling by mediation, then the processing advances to process 1110. In process 1110, the scheduling unit 105 executes scheduling that does not depend upon mediation for the task for which scheduling has not been performed as yet. Then, the processing ends in process 1113.

On the other hand, when the processing advances from process 1107 to process 1111, the supporter specification unit 109 determines, in process 1111, on the basis of the processing aptitude information of the other users stored in the processing aptitude information storage unit 103, whether or not there is a different candidate for a supporter. If it is determined in process 1111 that there is a different candidate for a supporter, then the processing returns to process 1103, and a supporter is specified from among the other candidates and scheduling by mediation is executed again. If it is determined in process 1111 that there is no different candidate for a supporter, then the processing advances to process 1112. In process 1112, the scheduling unit 105 determines that scheduling by mediation is not performable for the task of the target. The processing advances to process 1109 after process 1112. The scheduling unit 105 excludes the task, with regard to which it is determined in process 1112 that scheduling by mediation is not performable, from the target task of scheduling by mediation. Then in process 1110, the scheduling unit 105 executes scheduling that does not rely upon mediation to set a scheduled execution period.

In this manner, with the second embodiment, scheduling is executed for a plurality of tasks with relevancy to each other taking the desirability for setting a supporter, priority ranks for setting a supporter and so forth into consideration.

It is to be noted that, while the second embodiment described above is directed to an example wherein a task information creating person sets priority information in association with information of the desirability for supporting, the priority information may be set by some other method. For example, where a degree of importance of a task is set in the template for task information, the priority information may be set automatically on the basis of the degree of importance of the task. The degree of importance of a task is information for determining, when scheduled execution periods for a plurality of tasks overlap with each other, which task is to be executed precedently or which task is to be executed selectively.

### <Third Embodiment>

In the description of the first and second embodiments, an example is described wherein, when an overlapping period between a free period in the schedule of a task executor and a free period in the schedule of a supporter is equal to or longer than a required time period for a task, the overlapping period is set as a scheduled execution period for the task. A third embodiment is directed to an example wherein, even when the overlapping period is shorter than the required time period for a task, a scheduled execution period for the task is set so as to include the overlapping period.

A case sometimes occurs in which only it is sufficient for a task executor of a certain task to be able to consult a supporter at least within part of a period within which the task is executed. For example, a task executor who is not familiar to use of a specific electronic tool to be used when a task is executed may possibly request a supporter for supporting at an initial stage of task execution in regard to a starting method or a using method of the electronic tool. Alternatively, when a task includes collection of certain specific information and analysis of the collected information, if a task executor is good at an information collection work but is not at an analysis work, then there is the possibility that the task executor may request a supporter for supporting in the latter half in execution of the task. In the third embodiment, a scheduled execution period for a task is set such that, in such a case as described above, at least part of the scheduled execution period for the task may overlap with a free period in the schedule of the supporter.

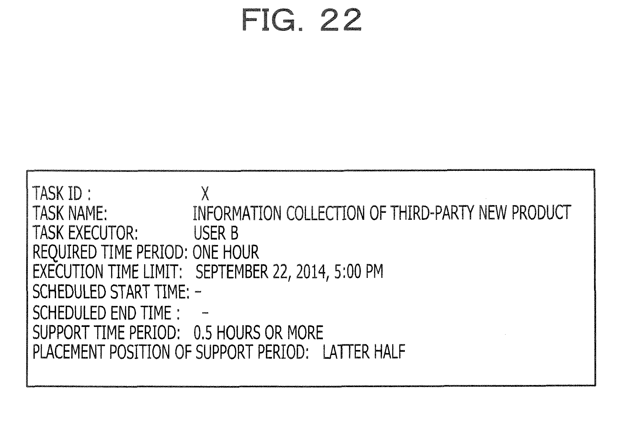

FIG. 22 is a view depicting an example of task information in the third embodiment where at least part of a scheduled execution period for a task X overlaps with a free period in the schedule of a supporter. The task information depicted in FIG. 22 includes, in addition to the task information depicted in FIG. 5B, an item of "support time period" such that description in the item prescribes a minimum time period for an overlapping period between a free period in the schedule of the task executor and a free period in the schedule of the supporter. In the example depicted, task information is prescribed such that 0.5 hours or more of the scheduled execution period for the task overlap with a free period in the schedule of the supporter. Further, an item of "placement position of support period" is provided in the task information such that description in the item prescribes at which position the overlapping period is to be placed within the scheduled execution period for the task. In the example depicted, the task information is prescribed such that a support period (overlapping period) is placed in the latter half of the scheduled execution period.

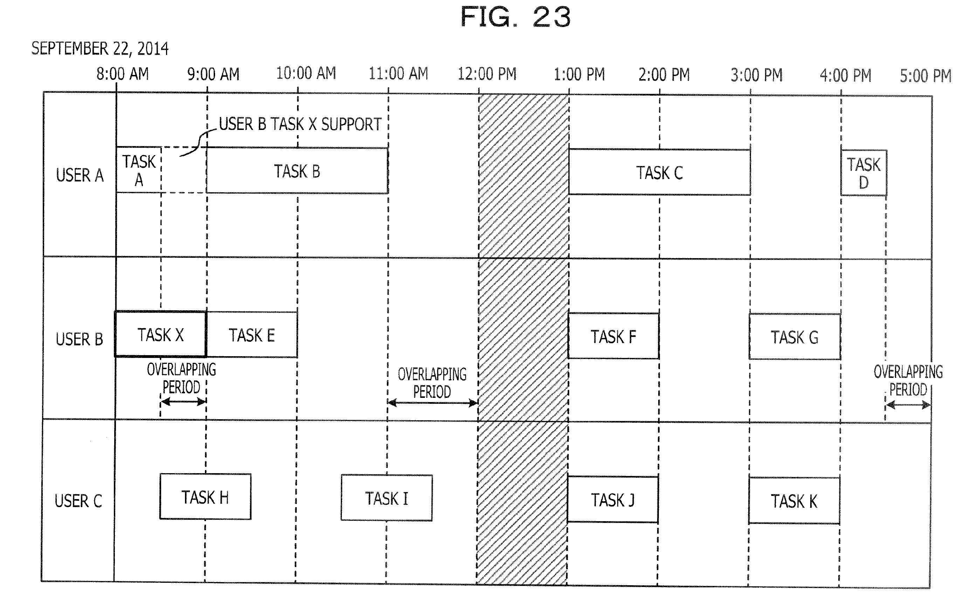

FIG. 23 is a view illustrating a scheduling method and a scheduling result according to the third embodiment for the task X. In the first embodiment, from among overlapping periods between free periods in the schedule of the user A who is a supporter and the schedule of the user B who is a task executor for the task X, an overlapping period equal to or longer than one hour that is the required time period for the task is set as a scheduled execution period for the task (refer to FIGS. 9 and 10). In contrast, in the third embodiment, if a free period of one hour or more in the schedule of the user B has, in the latter half of the free period, a period including an overlap of 0.5 hours or more with a free period in the schedule of the user A, then the free period can be set as a scheduled execution period for the task. The processing flow for scheduling in the third embodiment is substantially same as but is different in some processes from the above-described processing flow depicted in FIG. 14. In particular, in process 1007 depicted in FIG. 14, a "support time period" depicted in FIG. 22 is set as the "required time period for task," and overlapping periods are specified by the scheduling unit 105. Then in process 1007, the scheduling unit 105 specifies a period that includes, from among free periods in the schedule of the task executor, one of the specified overlapping periods and is equal to or longer than the required time period for the task. In FIG. 23, all of the three periods from 8:00 AM to 9:00 AM, from 10:30 AM to 12:00 PM and from 4:00 PM to 5:00 PM on September 22, 2014 can be set as a scheduled execution period for the task. FIG. 23 depicts contents of a schedule when the scheduling unit 105 selects the earliest period from among the three periods as the scheduled execution period for the task.

It is to be noted that, while FIG. 22 depicts an example wherein a particular time period is prescribed in the item of the support time period of the task information, the support time period may be specified otherwise like "equal to or more than 50% of required time period." Further, while FIG. 22 depicts task information in which both of a support time period and a placement position of the support time period are prescribed as an example, the third embodiment can be applied also to task information that prescribes only a support time period but does not prescribes a placement position of the support time period. In this case, setting of a scheduled execution period is carried out with a support time period taken into consideration while the placement position of the support time period is not taken into consideration.

In this manner, with the third embodiment, even in such a case that only part of a free period in the schedule of a task executor overlaps with a free period in the schedule of a supporter, a scheduled execution period for the task can be set. Further, the support period can be placed at a suitable position within the scheduled execution period for the task.

### <Fourth Embodiment>

In the description of the first to third embodiments, an example is described wherein free periods in a schedule of a supporter are extracted and are referred to, whereby a scheduled execution period for the task is set. This is based on the idea that, while the supporter is executing a different task, it is difficult for the supporter to support a task executor. However, depending upon contents of the different task, the supporter may be able to support the task executer to some degree even during execution of the task. For example, where contents of a task are to perform a durability test of a product, within a period within which a load is repetitively applied automatically to the product using test equipment, the worker may possibly perform some other work. A fourth embodiment is directed to a scheduling method in a case in which, even while a certain user is executing a task, the user can support a different user.

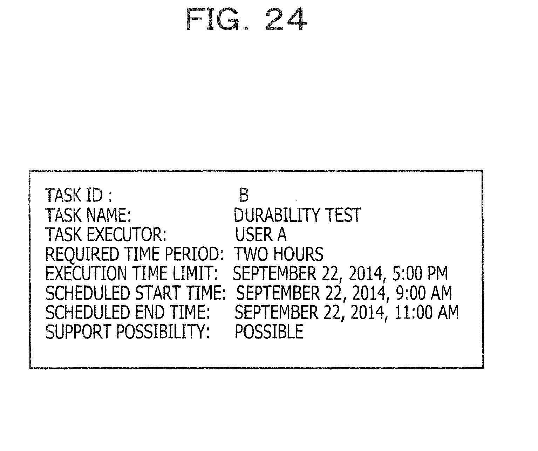

FIG. 24 is a view depicting contents of task information of a task in the fourth embodiment which is already placed in a schedule of a user A specified as a supporter for a task X. As the task information, the task ID is prescribed as "B"; the task name as "durability test"; the task executor as "user A"; the required time period as "two hours"; the execution time limit as "September 22, 2014, 5:00 PM"; the scheduled start time as "September 22, 2014, 9:00 AM"; and the scheduled end time as "September 22, 2014, 11:00 AM." It is assumed that this task corresponds to the task B placed in the schedule of the user A depicted in FIG. 6.

In the task information of the task B, an item of "support possibility" is provided further. The "support possibility" is information that prescribes whether or not the task executor who is executing the task is capable of supporting a different task executor who is executing a different task. In the example depicted in FIG. 24, the item of the support possibility is prescribed as "possible," and it is possible for the user A to support a different task executor while the user A is executing the task B.

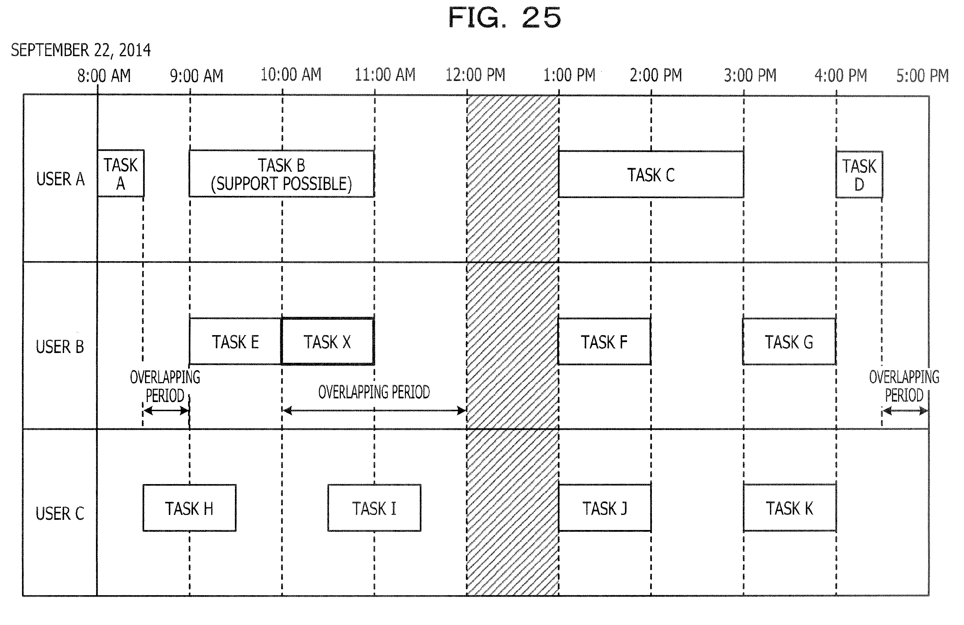

FIG. 25 is a view illustrating a scheduling method and a scheduling result for the task X in the fourth embodiment. The processing flow for scheduling in the fourth embodiment is substantially same as but is different in some processes from the above-described processing flow depicted in FIG. 14. In particular, in process 1005 depicted in FIG. 14, the free period extraction unit 104 extracts, from within a scheduled execution period for the task of a supporter, also a scheduled execution period for the task within which the supporter can support a different user as a free period in the schedule of the supporter. In the example depicted in FIG. 25, in the schedule of the user A, the period from 9:00 AM to 11:00 AM on September 22, 2014 is set as a scheduled execution period for the task B. As described hereinabove with reference to FIG. 24, the task information of the task B prescribes that the user can support a different user within an execution period of the task B. Therefore, in the scheduling for the task X, the free period extraction unit 104 extracts free periods from the schedule of the user A and extracts also the period from 9:00 AM to 11:00 AM on September 22, 2014, which is the scheduled execution period for the task B. Then, the scheduling unit 105 sets a scheduled execution period for the task X to an overlapping period between periods, which include free periods in the schedule of the user A and the scheduled execution period for the task B, and free periods in the schedule of the user B who is the task executor. FIG. 25 depicts a schedule in a case in which the period from 10:00 AM to 11:00 AM on September 22, 2014, which is the earliest period, is selected as a scheduled execution period for the task X.

In this manner, with the fourth embodiment, a scheduled execution period for a task can be set in scheduling for a task such that the scheduled execution period overlaps with a scheduled execution period for a different task of a supporter.

The fourth embodiment described above is directed to an example wherein scheduling is performed while a free period included in a schedule of a supporter and a scheduled execution period for a task within which the supporter can support a different user are considered equivalent to each other. As a modification to the fourth embodiment, the scheduling unit 105 first executes scheduling by mediation on the basis of free periods in a schedule of a supporter. Then, when scheduling by mediation is not performable appropriately, the scheduling unit 105 may execute scheduling by mediation taking also a scheduled execution period for a task of the supporter within which the supporter can support a different user into consideration.

### <Fifth Embodiment>

In the description of the first to fourth embodiments, it is not mentioned that, when scheduling for a task X is performed, a scheduled execution period for a different task placed already on the schedule of each user is changed. A fifth embodiment described below is directed to an example wherein scheduling by mediation is executed taking also whether or not it is possible to change a scheduled execution period for a different task placed already on the schedule into consideration.

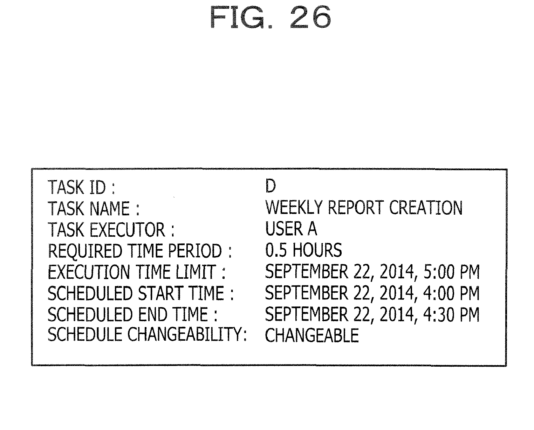

FIG. 26 is a view depicting an example of task information of a task placed already on a schedule and allowing changing of a scheduled execution period for the task according to the fifth embodiment. It is assumed that the task prescribed by the task information depicted in FIG. 26 corresponds to the task D placed on the schedule depicted in FIG. 6. As depicted in FIG. 26, in the task information of the task D, the task ID is prescribed as "D"; the task name as "weekly report creation"; the task executor as "user A"; the required time period as "0.5 hours"; the execution time limit as "September 22, 2014, 5:00 PM"; the scheduled start time as "September 22, 2014, 4:00 PM"; and the scheduled end time as "September 22, 2014, 4:30 PM." Further, an item for "schedule changeability" is provided in the task information. The item for schedule changeability is used to prescribe whether or not the scheduled execution period for the task is changeable. In FIG. 26, the item for schedule changeability is prescribed as "changeable." This indicates that the scheduled start time and the scheduled end time prescribed already can be changed. On the contrary, if the item for schedule changeability is prescribed as "unchangeable," then the scheduled execution period for the task is not changed. For example, if the task executor wants to definitely decide the scheduled execution period for the task so as to keep the scheduled execution period from being changed, then the task executor would access task information stored in the schedule storage unit 102 of the scheduling supporting apparatus 100 and having the scheduled execution period written therein already through the user interface device 200. Then, if the task executor fills out "unchangeable" to the item for the schedule changeability of the task information, then the execution time period for the task can be suppressed from being changed. The present fifth embodiment described below is directed to a scheduling method for a task X where a task with regard to which "changeable" is prescribed in the item of the schedule changeability exists. Note that it is assumed that, in the fifth embodiment, the task executor of the task X is the user C.

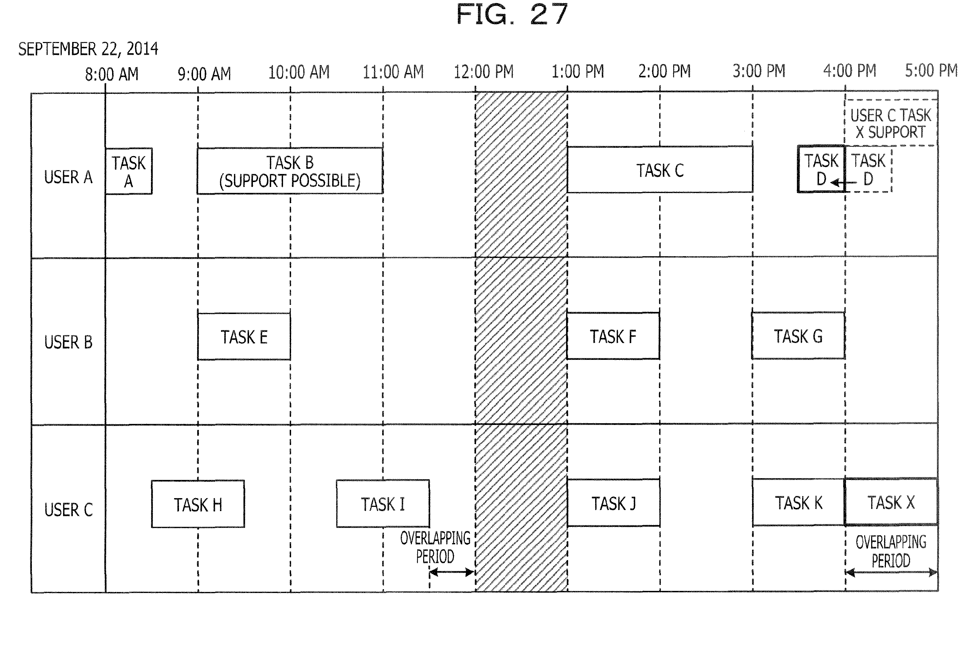

FIG. 27 is a view illustrating a scheduling method and a scheduling result according to the fifth embodiment. The scheduling unit 105 extracts overlapping periods between free periods in the schedule of the user C who is the task executor of the task X and free periods in the schedule of the user A who is the supporter. In FIG. 27, the period from 11:30 AM to 12:00 PM and the period from 4:30 PM to 5:00 PM on September 22, 2014 are overlapping periods. Both of the overlapping periods are shorter than one hour that is the required time period for the task X. However, the scheduled execution period for the task D is changeable as depicted in FIG. 26. In this case, the scheduling unit 105 determines whether or not it is possible to produce an overlapping period equal to or longer than one hour, which is the required time period for the task X, by changing the schedule for the task D. For example, the scheduling unit 105 determines whether or not it is possible to change the scheduled execution period for the task D to the earlier period. In FIG. 27, the period before 4:00 PM that is the scheduled start time for the task D is a free period and besides the free period is sufficient for the required time period for the task D. Accordingly, it is possible to change the scheduled execution period for the task D to the free period. Further, the scheduling unit 105 determines whether or not, when the scheduled execution period for the task D is changed to the free period, an overlapping period equal to or longer than the required time period for the task X can be produced. In FIG. 27, if the scheduled execution period for the task D is changed to the period from 3:30 PM to 4:00 PM, then an overlapping period equal to or longer than the required time period for the task X is produced. Therefore, the scheduling unit 105 changes the scheduled execution period for the task D and determines the produced overlapping period as the scheduled execution period for the task X. It is to be noted that, in this case, the scheduling supporting apparatus 100 may notify the user A who is the supporter through the user interface device 200a that the scheduled execution period for the task D is changed.

In this manner, the scheduling unit 105 newly produces an overlapping period between a free period in the schedule of the task executor and a free period in the schedule of the supporter by changing the scheduled execution period for a task placed already on the schedule of the supporter. Further, a scheduled execution period for the task is set using the newly produced overlapping period.

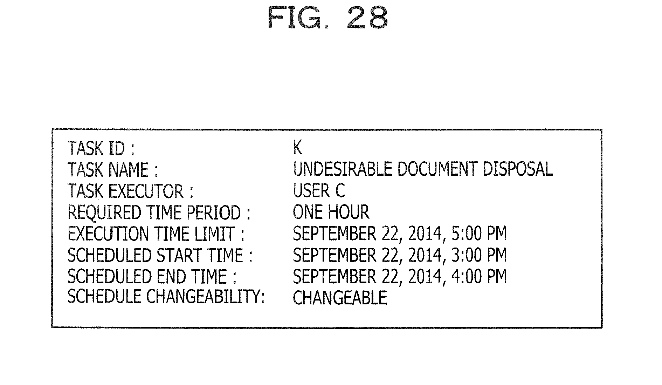

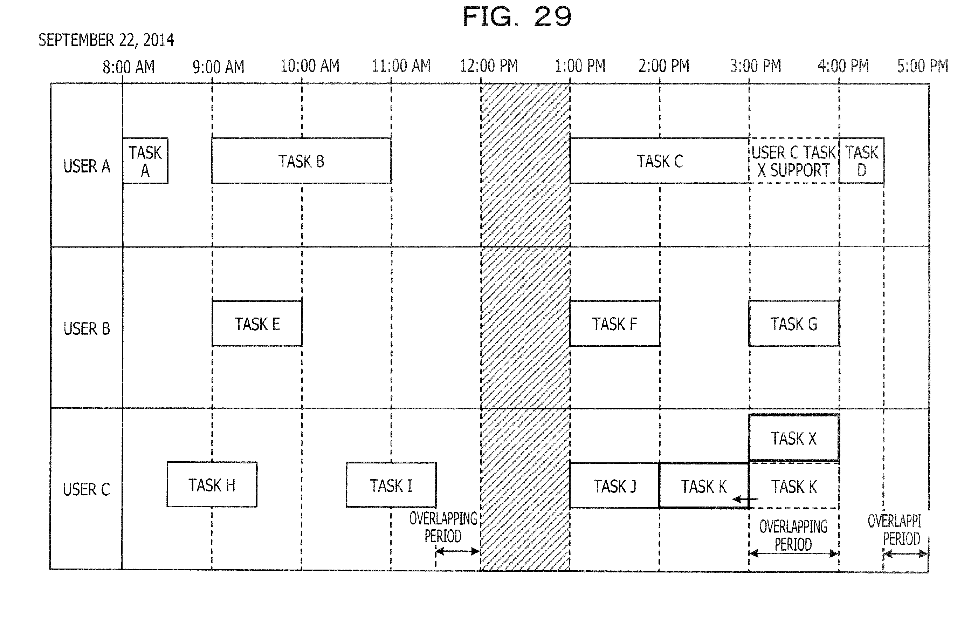

While an example wherein a scheduled execution period for a task of a supporter is changed is described with reference to FIGS. 26 and 27, an example wherein a scheduled execution period for a different task of a task executor itself is changed is described below with reference to FIGS. 28 and 29.

FIG. 28 is a view depicting task information in the fifth embodiment for the task K depicted in FIG. 6. As depicted in FIG. 28, in the task information of the task K, the task ID is prescribed as "K"; the task name as "undesirable document disposal"; the task executor as "user C"; the required time period as "one hour"; the execution time limit as "September 22, 2014, 5:00 PM"; the scheduled start time as "September 22, 2014, 3:00 PM"; the scheduled end time as "September 22, 2014, 4:00 PM"; and the schedule changeability as "changeable."

As depicted in FIG. 29, the period from 2:00 PM to 3:00 PM on September 22, 2014 prior to the period from 3:00 PM to 4:00 PM on September 22, 2014 which is the scheduled execution period for the task K is a free period. Thus, by moving the scheduled execution period for the task K to this free period, the period from 3:00 PM to 4:00 PM on September 22, 2014 can be newly produced as an overlapping period between a free period in the schedule of the task executor and a free period in the schedule of the supporter. In such a case as just described, the scheduling unit 105 changes the scheduled execution period for the task K to the period from 2:00 PM to 3:00 PM on September 22, 2014 and determines the produced overlapping period as a scheduled execution period for the task X.

In this manner, by changing a scheduled execution period for a task placed already on a schedule of a task executor, an overlapping period between a free period in the schedule of the task executor and a free period in the schedule of the supporter is produced newly. Further, scheduling of the task is executed using the newly produced overlapping period.

### <Sixth Embodiment>

The first to fifth embodiments described above are directed to a scheduling method where one user executes a certain task. A sixth embodiment described below is directed to a scheduling method in a case in which a plurality of users individually execute a same task. Here, the "case in which a plurality of users individually execute a same task" does not signify a case in which a plurality of users jointly execute such a task as, for example, a meeting but signifies another case in which, for example, a plurality of users individually perform collection of new product information of particular third-party companies. In the sixth embodiment, it is assumed that the target task for scheduling is the task X and the user B executes new product information collection regarding a competitor company P while the user C executes new product information collection regarding another competitor company Q. It is to be noted that a notification that the research target company of the user B is the company P may be conveyed to the user B by providing, for example, a communication comment field in the task information such that a creator of the task information attaches such a comment as "Please perform research of the company P." A notification of information for specifying a research target company may be conveyed to the user C by a similar method.

In the sixth embodiment, the scheduling unit 105 performs scheduling so that a scheduled execution period for the task X of the user B may be earlier than a scheduled execution period for the task X of the user C. In particular, where users having different capability indices execute tasks of a same type, scheduling is performed such that the user having a higher capability index executes the task first and then the user having a lower capability index executes the task within a free period of the user having the higher capability index. As a result, when the user C having a lower capability index executes the task, the user B having a higher capability index can teach his or her knowledge acquired through task execution performed formerly to the user C. Consequently, the efficiency in task execution by a plurality of users can be improved.

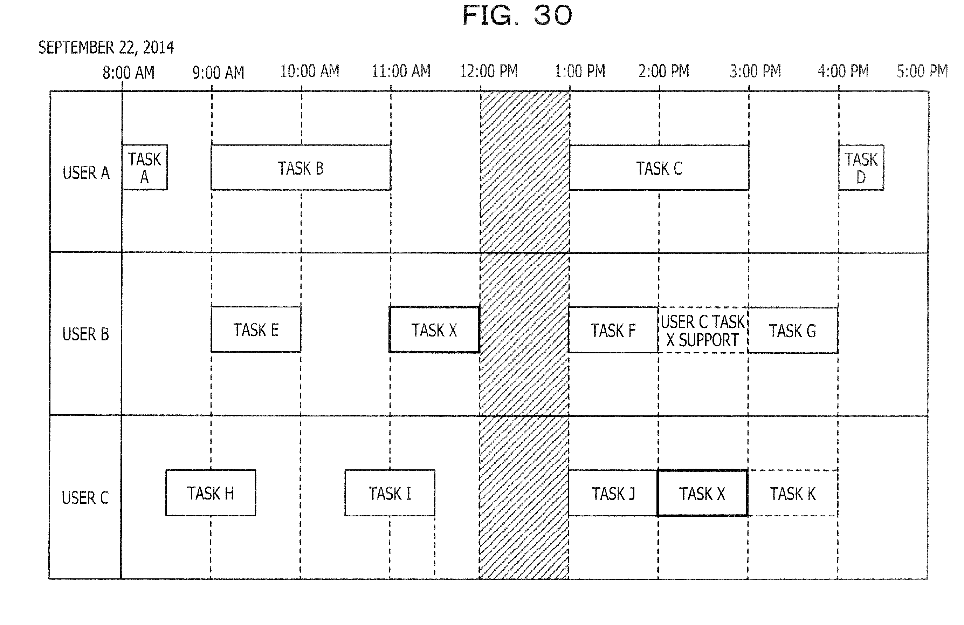

FIG. 30 is a view depicting a scheduling method and a scheduling result according to the sixth embodiment. The scheduling supporting apparatus 100 compares the capability index of the user B and the capability index of the user C with each other and first executes scheduling for the user B having a higher capability index than a capability index of the user C. In this scheduling, the scheduled execution period for the task X is prescribed as the period from 11:00 AM to 12:00 PM on September 22, 2014. Thereafter, scheduling for the user C having a lower capability index than a capability index of the user B is executed. In this scheduling, the supporter specification unit 109 specifies the user B as a supporter. Then, the scheduling unit 105 sets the scheduled execution period for the task X of the user C to an overlapping period between a free period in the schedule of the user C and a free period in the schedule of the user B, the overlapping period being later than the scheduled execution period for the task X of the user B. In the example depicted, the scheduled execution period for the task X of the user C is prescribed as the period from 2:00 PM to 3:00 PM on September 22, 2014.

Here, a case in which a plurality of users execute a same task is described. However, the sixth embodiment can be applied also to a case in which a plurality of users individually execute different tasks from each other. For example, by applying the sixth embodiment also to a case in which a plurality of different tasks belonging to the same task type (refer to the first embodiment) are individually executed by a plurality of users, experiences of a user having a higher capability index can be taught to a different user having a lower capability index.

A scheduling method by mediation is described above in reference to the first to sixth embodiments. In the following, additional technical matters are described further.

### (Re-scheduling by a task executor when a schedule of a supporter is changed)

After a scheduled execution period for a task is determined so as to overlap with a free period in the schedule of a supporter using any of the methods described hereinabove in reference to the first to sixth embodiments, the schedule of the supporter is changed occasionally. For example, if a free period in the schedule of the supporter is set once as a scheduled execution period for a different task that occurs newly, then the task executor is sometimes disabled to get supporting of a supporter. In such a case, the scheduling supporting apparatus 100 may execute scheduling again to change the scheduled execution period for the task so that the task executor can get supporting of the supporter. In the following, an example of a procedure when scheduling is performed again is described.

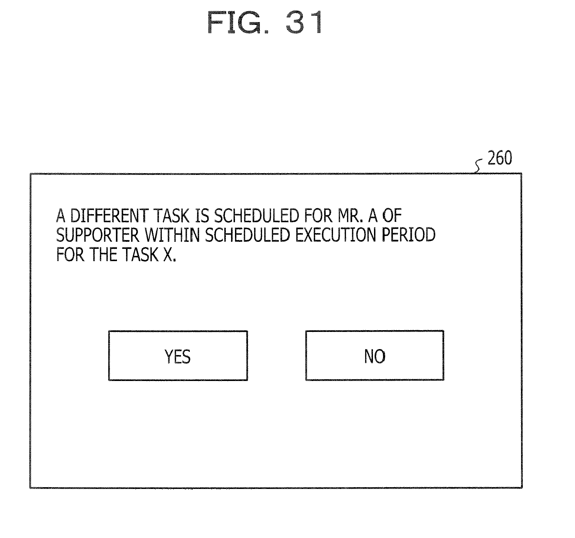

If the schedule of the supporter is changed and the supporter becomes disabled to perform supporting of a different user for the task X, then the scheduling supporting apparatus 100 issues an inquiry to the task executor of the task X through the user interface device 200 about whether or not re-scheduling is to be executed. FIG. 31 is a view illustrating a re-scheduling method. In particular, FIG. 31 is a view exemplifying display contents displayed on a display device of a user interface device in an inquiry to the task executor of the task X. The display device displaying the display contents depicted in FIG. 31 and the user interface device including the display device may be the display device 260 depicted in FIG. 4 and the user interface device 200 depicted in FIG. 1, respectively. For example, on the display device 260, such a message as "A different task is scheduled for the user A of the supporter within a scheduled execution period for the task X. Do you want re-scheduling for the task X?" and a button for "Yes" to be selected when the task executor wants re-scheduling for the task X and another button for "No" to be selected when the task executor does not want re-scheduling for the task X are displayed. Where a touch panel is used as the inputting device 250, if the position of the touch panel corresponding to the displayed position of the button for "Yes" is touched, then a requesting signal for the instruction to execute re-scheduling is transmitted from the user interface device 200 to the scheduling supporting apparatus 100. The scheduling supporting apparatus 100 receives the requesting signal and specifies an overlapping period between free periods in the schedules of the task executor and the supporter at the point of time and then sets a scheduled execution period for the task X again. Where a touch panel is used as the inputting device 250, if the position of the touch panel corresponding to the displayed position of the button for "No" is touched, then a signal indicating that execution of re-scheduling is undesirable is transmitted from the user interface device 200 to the scheduling supporting apparatus 100, and re-setting of the scheduled execution period for the task is not performed.

In this manner, even after a scheduled execution period for a task is set once, if re-setting of the scheduled execution period for the task is performed as occasion demands, then it is possible for the task executor to get supporting of the supporter.

### (Adjustment of the required time period)

In the first to sixth embodiments, scheduling is executed assuming that the required time period for execution of a task is fixed irrespective of the difference in capability of a plurality of users. As a modification to the embodiments, the scheduling supporting apparatus 100 may perform scheduling adjusting the required time period in response to the capability of each user. For example, as depicted in FIG. 7B, the user A can process a task, which is typically processed in one hour, in 0.5 hours. On the other hand, the user C processed a task that is typically processed in one hour, in 1.5 hours. In this case, where the task executor is the user A, the scheduling supporting apparatus 100 performs scheduling changing the required time period prescribed in the task information, in which the required time period is prescribed as one hour, to 0.5 hours. Similarly, where the task executor is the user C, the scheduling supporting apparatus 100 performs scheduling changing the required time period prescribed in the task information, in which the required time period is prescribed as one hour, to 1.5 hours. Contents of the schedule are optimized by adjusting the required time period for a task in response to the capability of the task executor in this manner.

### (Feedback from the user interface device 200 to the scheduling supporting apparatus 100)

After a scheduled execution period for a task is determined by the scheduling supporting apparatus 100, contents of the schedule are transmitted from the scheduling supporting apparatus 100 to the user interface device 200. In response to the transmission of the contents of the schedule from the scheduling supporting apparatus 100, that a user transmits some information relating to execution of the task to the scheduling supporting apparatus 100 through the user interface device 200 is referred to as "feedback," and information conveyed to the scheduling supporting apparatus 100 by the feedback is referred to as "feedback information." The feedback includes a case in which a signal indicative of an execution situation of the task or a signal for requesting changing the schedule contents is conveyed from the user interface device 200 to the scheduling supporting apparatus 100. Here, a case in which a user does not agree with the schedule contents and requests the scheduling supporting apparatus 100 to change the schedule is described as an example of the feedback.

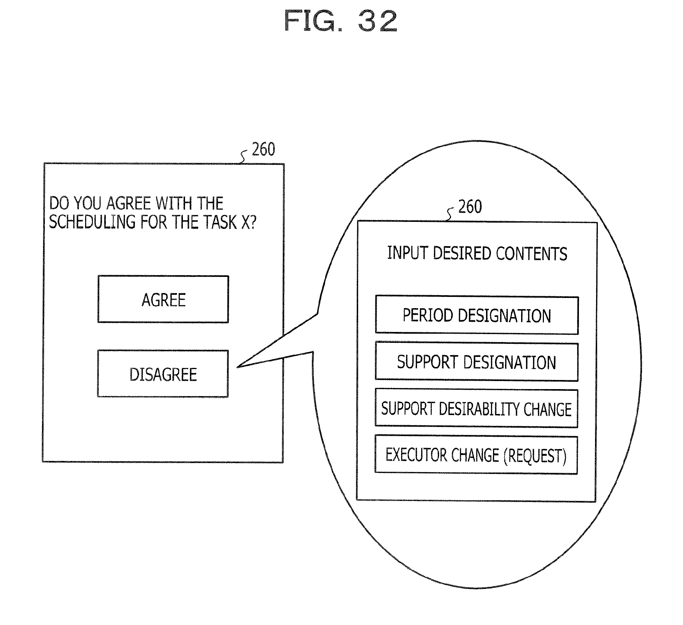

The user interface device 200 displays contents of a schedule transmitted thereto from the scheduling supporting apparatus 100 on the display device 260. The user would confirm the own schedule on the basis of the display contents of the display device 260 and notify the scheduling supporting apparatus 100 through the user interface device 200 of whether or not the user agrees with the schedule contents. FIG. 32 is a view illustrating a feedback method. In particular, FIG. 32 depicts an example of contents of a screen image for feedback displayed on a display device of a user interface device. The display device displaying the contents of the screen image in FIG. 32 and the user interface device including the display device may be the display device 260 depicted in FIG. 4 and the user interface device 200 depicted in FIG. 1, respectively. For example, such a message as "Do you agree with the schedule contents for the task X?," a button for "Agree" to be selected when the user agrees with the schedule contents and another button for "Disagree" to be selected when the user does not agree with the schedule contents are displayed on the display device 260. Where a touch panel is used as the inputting device 250, if the user touches with the position of the touch panel corresponding to the displayed position of the button for "Agree," then a signal indicating that the user agrees with the schedule contents is transmitted from the user interface device 200 to the scheduling supporting apparatus 100. On the other hand, if the user touches with the position of the touch panel corresponding to the displayed position of the button for "Disagree," then the user can notify the scheduling supporting apparatus 100 through the user interface device 200 of what schedule the user wants. For example, when the position of the touch panel corresponding to the displayed position of the button for "Disagree" is touched, such an image as depicted in a balloon portion in FIG. 32 may be displayed on the display device 260 of the user interface device 200. FIG. 32 depicts an example wherein, in addition to a message "Input desired contents," such buttons to be selected by the user as "period designation," "supporter designation," "support desirability change" and "executor change (request)" are displayed. If the user itself tries to designate a scheduled execution period for a task, then the position of the touch panel corresponding to the displayed position of the button for "period designation" would be touched by the user, and a scheduled execution period is inputted particularly to the user interface device 200. If the user tries to designate a person who is to become a supporter, then the position of the touch panel corresponding to the displayed position of the button for "supporter designation" would be touched by the user, and information that designates a particular user as a supporter is inputted to the user interface device 200. If the user tries to designate whether or not it is desirable to set a supporter, then the position of the touch panel corresponding to the displayed position of the button for "support desirability change" would be touched by the user, and whether or not supporting is desirable is inputted to the user interface device 200. Such input data is transmitted as feedback information from the user interface device 200 to the scheduling supporting apparatus 100, and the scheduling supporting apparatus 100 executes re-scheduling on the basis of the feedback information.

On the other hand, when the user wants to request a different user to execute a task, the position of the touch panel corresponding to the displayed position of the button for "executor change (request)" would be touched by the user. Further, information for specifying a different user is inputted to the user interface device 200 and transmitted as feedback information to the scheduling supporting apparatus 100. The scheduling supporting apparatus 100 executes re-scheduling so that the different user is to execute the task.

A schedule on which an intention of a user is reflected more can be created by transmitting feedback information from the user to the scheduling supporting apparatus 100 in this manner.

### (Scheduling with a margin before an execution time limit taken into consideration)

The first to sixth embodiments described above are directed to an example wherein a scheduled execution period for a task is set so that the task is executed before an execution time limit for the task. In a schedule in which it is prescribed that a plurality of tasks are to be executed, execution of the tasks may not progress as scheduled. Especially, according to scheduling by mediation, there is the possibility that a scheduled execution period for a task may be set to a rather late period in comparison with a scheduled execution period set taking only a free period of a task executor into consideration. Therefore, when a scheduled execution period set by scheduling by mediation is later than a point of time prior by a given period of time to the execution time limit, the scheduling supporting apparatus 100 may execute ordinary scheduling that does not rely upon mediation.

### (Storage place of a schedule)

While FIG. 8 depicts an example wherein the scheduling supporting apparatus 100 functions as the schedule storage unit 102, the task information source 300 or the user interface device 200 of each user may store a schedule. Alternatively, a schedule may be stored into a cloud system that can be accessed by the scheduling supporting apparatus 100. In this case, when executing scheduling, the scheduling supporting apparatus 100 accesses the task information source 300, the user interface device 200 or the cloud system to acquire a schedule of each user. Further, when an updated schedule is created, the scheduling supporting apparatus 100 notifies the task information source 300, the user interface device 200 or the cloud system of the updated schedule.

### (Task information source 300)

The task information source 300 may be configured using a server that executes BPM, an electronic schedule device for personal use or an electronic schedule device that allows cooperative inputting thereto by a plurality of users, an electronic action item list device that lists up and electronically stores tasks to be executed or the like.

### (System configuration)

The first to sixth embodiments described hereinabove are directed to an example of a system wherein the task information source 300 or the user interface device 200 is configured as a separate unit in hardware from the scheduling supporting apparatus 100. However, the task information source 300 or the user interface device 200 may be implemented as a unitary unit in hardware together with the scheduling supporting apparatus 100. For example, the task information source 300 itself performs scheduling for a task and transmits the created schedule to the user interface device 200. Alternatively, the inputting device 150 and the display device 160 of the scheduling supporting apparatus 100 may function as a user interface with a user. In this case, the user would use the display device 160 to confirm the schedule contents of the task and use the inputting device 150 to input feedback information with regard to the schedule contents. A function equivalent to a function of the scheduling supporting apparatus 100 may be incorporated into the user interface device 200 such that the user interface device 200 acquires task information from the task information source 300 and executes scheduling. Furthermore, the user itself may input a produced task to the user interface device 200 so as to cause the user interface device 200 to execute scheduling. In this case, the entire system depicted in FIG. 1 is implemented by the user interface device 200.

## Claims

1. An apparatus comprising:
a memory; and
a processor coupled to the memory and configured to
specify a second user, from among a plurality of users, having a given processing aptitude relating to a first task to be executed by a first user,
specify a first overlapping period between a first free period of a first schedule of the first user and a second free period of a second schedule of the second user, and
set a scheduled execution period for the first task including at least part of the first overlapping period to the first schedule.

2. The apparatus according to claim 1, wherein the processor is configured to
hold a capability index indicating the processing aptitude of each of the plurality of users, and
specify the second user who has the capability index higher than the capability index of the first user from among the plurality of users.

3. The apparatus according to claim 1 or claim 2, wherein
the second free period includes a period within which execution of a different task is not scheduled in the second schedule, and another period within which execution of the different task is scheduled in the second schedule and the second user is capable of participating in execution of the first task by the first user.

4. The apparatus according to any preceding claim, wherein
an execution time limit is prescribed for the first task, and
the processor is configured to set, where the scheduled execution period for the first task is not able to be set such that the first task is executed before the execution time limit, the scheduled execution period for the first task without taking the second free period of the second schedule into consideration.

5. The apparatus according to claim 4, wherein the processor is configured to
extract, when the scheduled execution period for the first task is not able to be set such that the first task is executed before the execution time limit and the plurality of users include a third user having the capability index higher than the capability index of the first user, a third free period from within a third schedule of the third user and specify a second overlapping period between the first free period and the third free period, and
set the scheduled execution period for the first task including at least part of the second overlapping period to the first schedule.

6. The apparatus according to any of claims 2 to 5, wherein the processor is configured to
determine the capability index based on a time period taken for executing the first task by each of the plurality of users.

7. The apparatus according to any of claims 2 to 5, wherein the processor is configured to
determine the capability index based on an actually measured value of a time period taken for executing any task included in a task group that includes the first task by each of the plurality of users.

8. The apparatus according to claim 2, wherein the processor is configured to
set, in a case wherein the scheduled execution period for the first task is set in the first schedule and the scheduled execution period for a second task including same task contents as task contents of the first task is set in a fourth schedule of a fourth user from among the plurality of users and wherein the capability index of the fourth user is lower than the capability index of the first user, the scheduled execution period for the first task to a period earlier than the scheduled execution period for the second task.

9. The apparatus according to any preceding claim, wherein the processor is configured to
change, in a case wherein the scheduled execution period for a fifth task in the second schedule is set so as to overlap with the scheduled execution period for the first task in the first schedule, the scheduled execution period for the first task of the first user.

10. A scheduling method using a memory and a processor coupled to the memory, the method comprising:
holding, by the memory, a capability index indicating a processing aptitude of each of a plurality of users, a plurality of schedule of the plurality of user;
specifying, by the processer, a second user, from among a plurality of users, having a given processing aptitude relating to a first task to be executed by a first user;
specifying, by the processor, a first overlapping period between a first free period of a first schedule of the first user and a second free period of a second schedule of the second user; and
set, by the processor, a scheduled execution period for the first task including at least part of the first overlapping period to the first schedule.

11. The scheduling method according to claim 10, further comprising:
specifying, by the processor, the second user who has the capability index higher than the capability index of the first user from among the plurality of users.

12. The scheduling method according to claim 10 or claim 11, wherein the second free period includes a period within which execution of a different task is not scheduled in the second schedule, and another period within which execution of the different task is scheduled in the second schedule and the second user is capable of participating in execution of the first task by the first user.

13. The scheduling method according to any of claims 10 to 12, further comprising:
holding, by the memory, an execution time limit prescribed for the first task,
wherein the scheduled execution period for the first task is not able to be set such that the first task is executed before the execution time limit, setting, by the processor, the scheduled execution period for the first task without taking the second free period of the second schedule into consideration.

14. The scheduling method according to claim 13, further comprising:
extracting, by the processor, when the scheduled execution period for the first task is not able to be set such that the first task is executed before the execution time limit and the plurality of users include a third user having the capability index higher than the capability index of the first user, a third free period from within a third schedule of the third user and specify a second overlapping period between the first free period and the third free period; and
setting, by the processor, the scheduled execution period for the first task including at least part of the second overlapping period to the first schedule.

15. A program that causes a processor to execute operations, the operations comprising:
holding a capability index indicating a processing aptitude of each of a plurality of users, a plurality of schedule of the plurality of user;
specifying a second user, from among a plurality of users, having a given processing aptitude relating to a first task to be executed by a first user,
specifying a first overlapping period between a first free period of a first schedule of the first user and a second free period of a second schedule of the second user, and
set a scheduled execution period for the first task including at least part of the first overlapping period to the first schedule.
